# EUROPEAN PATENT APPLICATION

(11) **EP 4 701 271 A1**
(43) Date of publication of application: **25.02.2026**
(21) Application number: 24792466.5
(22) Date of filing: 28.03.2024
(51) Int. Cl.: H04W 48/02, H04W 24/10, H04W 48/08, H04W 72/0453, H04W 72/1268

(54) **TERMINAL, BASE STATION, AND COMMUNICATION METHOD**

(30) Priority: 17.04.2023 JP 2023067127
(71) Applicant: Panasonic Intellectual Property Corporation of America, Torrance, CA 90504 (US)
(72) Inventor: INOUE, Tomohiro, kadoma-shi, Osaka 571-0057 (JP); SUZUKI, Hidetoshi, kadoma-shi, Osaka 571-0057 (JP); NUNOME, Tomoya, kadoma-shi, Osaka 571-0057 (JP); HORIUCHI, Ayako, kadoma-shi, Osaka 571-0057 (JP); YAMAMOTO, Tetsuya, kadoma-shi, Osaka 571-0057 (JP); NISHIO, Akihiko, kadoma-shi, Osaka 571-0057 (JP)
(74) Representative: Grünecker Patent- und Rechtsanwälte PartG mbB
(86) International application number: PCT/JP2024/012857
(87) International publication number: WO 2024/219190

(57) **Abstract**

This terminal comprises: a control circuit that, among first frequency resources allocated to uplink transmission in a certain time resource, configures a second frequency resource in which no uplink transmission is performed on the basis of notification information; and a transmission circuit that performs uplink transmission on the basis of the second frequency resource.

## Description

### Technical Field

The present disclosure relates to a terminal, a base station, and a communication method.

### Background Art

The specification of a physical layer for Release 17 new radio access technology (NR) has been completed as functional extension of the 5th generation mobile communication systems (5G) in the 3rd generation partnership project (3GPP). NR supports functions for realizing Ultra Reliable and Low Latency Communication (URLLC) in addition to enhanced Mobile Broadband (eMBB) to meet requirements such as high speed and large capacity (see, e.g., Non-Patent Literature (hereinafter, referred to as NPL) 1 to NPL 6).

### Citation List

### Non-Patent Literature

NPL 1
   3GPP TS 38.211 V17.4.0, "NR; Physical channels and modulation (Release 17)," Jan. 2023
NPL 2
   3GPP TS 38.212 V17.5.0, "NR; Multiplexing and channel coding (Release 17)," Mar. 2023
NPL 3
   3GPP TS 38.213 V17.5.0, "NR; Physical layer procedure for control (Release 17)," Mar. 2023
NPL 4
   3GPP TS 38.214 V17.5.0, "NR; Physical layer procedures for data (Release 17)," Mar. 2023
NPL 5
   3GPP TS 38.215 V17.3.0, "NR; Physical layer measurements (Release 17)," Mar. 2023
NPL 6
   3GPP TS 38.331 V17.4.0, "NR; Radio Resource Control (RRC) protocol specification (Release 17)", Mar. 2023

### Summary of Invention

However, there is room for study on a method for measuring interference between base stations.

A non-limiting embodiment of the present disclosure facilitates providing a terminal, a base station, and a communication method each capable of appropriately measuring interference between base stations.

A terminal according to one embodiment of the present disclosure includes: control circuitry, which, in operation, configures, in a first frequency resource, a second frequency resource based on indication information, the first frequency resource being allocated to uplink transmission in a certain time resource, the second frequency resource not performing the uplink transmission; and transmission circuitry, which, in operation, performs the uplink transmission based on the second frequency resource.

It should be noted that general or specific embodiments may be implemented as a system, an apparatus, a method, an integrated circuit, a computer program, a storage medium, or any selective combination thereof.

According to one embodiment of the present disclosure, it is made possible to appropriately measure interference between base stations.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an exemplary subband non-overlapping full duplex (SBFD) operation;
FIG. 2 is a diagram illustrating an exemplary Dynamic/flexible time division duplex (TDD) operation;
FIG. 3 is a diagram illustrating an exemplary cross-link interference (CLI) between base stations;
FIG. 4 is a diagram illustrating an exemplary configuration of a muting resource in CLI measurement between base stations;
FIG. 5 is a diagram illustrating exemplary configurations of muting resources;
FIG. 6 is a block diagram illustrating an exemplary configuration of a part of a base station;
FIG. 7 is a block diagram illustrating an exemplary configuration of a part of a terminal;
FIG. 8 is a block diagram illustrating an exemplary configuration of the base station;
FIG. 9 is a block diagram illustrating an exemplary configuration of the terminal;
FIG. 10 is a sequence diagram illustrating exemplary operations of a base station and a terminal;
FIG. 11 is a diagram illustrating another exemplary configuration of a muting resource;
FIG. 12 is a diagram illustrating another exemplary configuration of a muting resource;
FIG. 13 is a diagram illustrating another exemplary configuration of a muting resource;
FIG. 14 is a diagram illustrating another exemplary configuration of the muting resource;
FIG. 15 is a diagram illustrating another exemplary configuration of a muting resource;
FIG. 16 is a diagram illustrating still another exemplary configuration of a muting resource;
FIG. 17 is a diagram illustrating exemplary transmission power control of Physical Uplink Shared Channel (PUSCH);
FIG. 18 is a diagram illustrating exemplary allocation of a Demodulation Reference Signal (DMRS) in Uplink Multi-User-Multiple Input Multiple Output (UL MU-MIMO);
FIG. 19 is a diagram illustrating an exemplary Xn interface between base stations;
FIG. 20 is a diagram illustrating an exemplary architecture of a 3GPP NR system;
FIG. 21 schematically illustrates a functional split between Next Generation - Radio Access Network (NG-RAN) and 5th Generation Core (5GC);
FIG. 22 is a sequence diagram of a Radio Resource Control (RRC) connection setup/reconfiguration procedure;
FIG. 23 schematically illustrates usage scenarios of enhanced Mobile BroadBand (eMBB) massive Machine Type Communications (mMTC), and Ultra Reliable and Low Latency Communications (URLLC); and
FIG. 24 is a block diagram illustrating an exemplary 5G system architecture for a non-roaming scenario.

### Description of Embodiments

Hereinafter, embodiments of the present disclosure will be described in detail with reference to the accompanying drawings.

[Regarding subband non-overlapping full duplex (SBFD) and Dynamic/flexible time division duplex (TDD)]

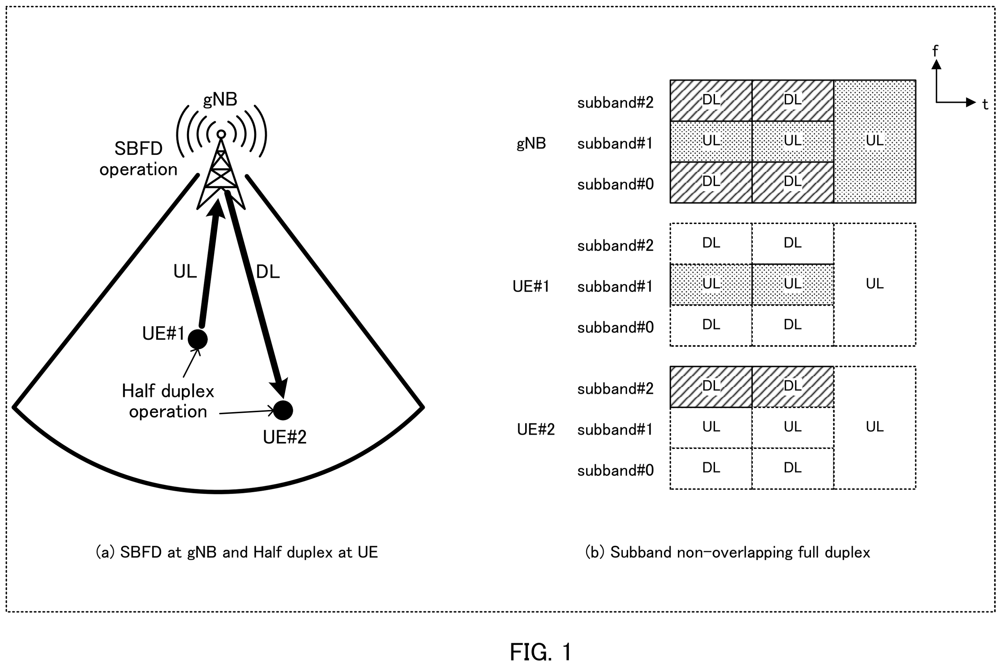

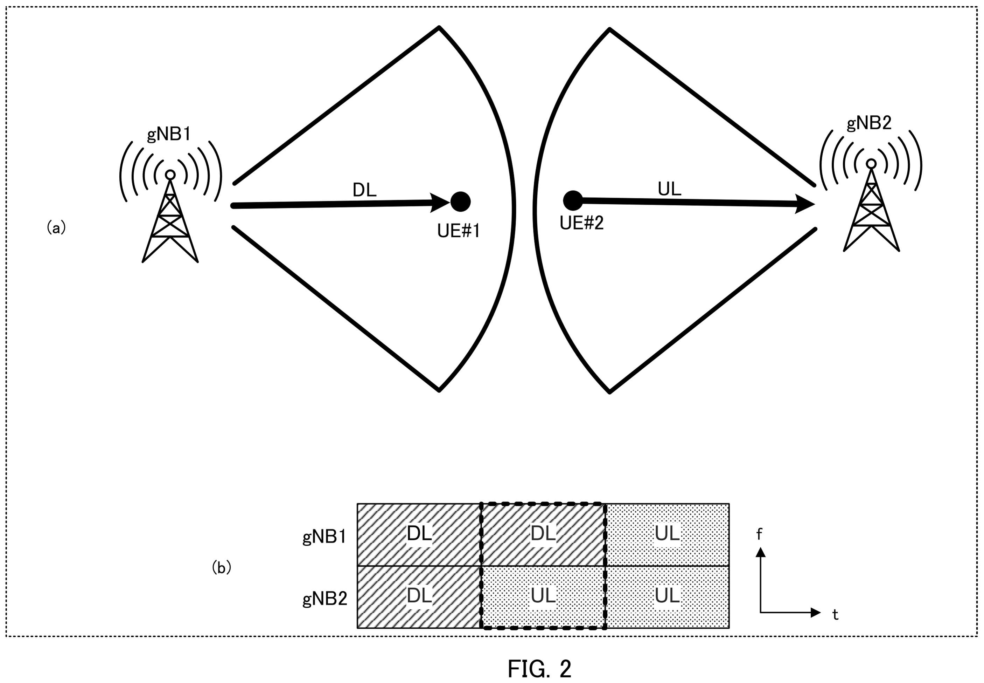

In Release 18, subband non-overlapping full duplex (SBFD) and Dynamic/flexible TDD have been discussed. FIG. 1 illustrates an exemplary SBFD, and FIG. 2 illustrates an exemplary Dynamic/flexible TDD.

In FIG. 1, (a) illustrates exemplary operations of a base station (also referred to as gNB) and terminals (each also referred to as User Equipment (UE) (e.g., UE#1 and UE#2) in the same cell in an SBFD operation. In the SBFD operation, the base station performs an SBFD operation, and the terminals perform Half duplex operations.

In FIG. 1, (b) illustrates exemplary allocation of subbands in an SBFD operation. In (b) of FIG. 1, the vertical axis represents frequency, and the horizontal axis represents time. In (b) of FIG. 1, "UL" refers to Uplink transmission, and "DL" refers to Downlink transmission. Further, resources that are not used in each device (e.g., gNB, UE#1, and UE#2) are indicated by dotted lines.

As illustrated in (b) of FIG. 1, in SBFD, a frequency resource (frequency band) is divided into a plurality of subbands (or each also referred to as a band, RB set, or sub Bandwidth part (BWP)), and transmissions in different directions in units of subbands are supported. As illustrated in (b) of FIG. 1, the base station can perform transmission and reception (e.g., SBFD operation) in uplink and downlink simultaneously, and the terminal can perform transmission and reception (e.g., Half duplex operation) in either uplink or downlink in a certain time resource. For example, in (b) of FIG. 1, UE#1 communicates with the base station in uplink and UE#2 communicates with the base station in downlink in the same time resource (e.g., slot or symbol).

In FIG. 2, (a) illustrates exemplary operations of different base stations (e.g., gNB1 and gNB2) and terminals (e.g., UE#1 and UE#2) in a Dynamic/flexible TDD operation. In a Dynamic/flexible TDD operation, base stations and terminals may perform Half duplex operations and transmission directions in different base stations are possibly different from each other.

In FIG. 2, (b) illustrates an exemplary resource allocation in Dynamic/flexible TDD. In the example in (b) of FIG. 2, gNB1 performs DL transmission to UE#1, and gNB2 performs UL reception from UE#2 in the same time resource (e.g., slot or symbol at the same time point).

### [Regarding Interference]

In the case of a Dynamic/flexible TDD operation, various types of interference possibly occur. For example, Cross-Link Interference (CLI) between terminals (UE-to-UE) (hereinafter, may be referred to as "inter-terminal CLI interference") and CLI between base stations (gNB-to-gNB) (hereinafter, may be referred to as "inter-base station CLI interference") possibly occur. CLI between terminals and CLI between base stations degrade reception performance to a large extent, so that measures have been sought.

In the following, regarding CLI between base stations, a base station that causes interference is referred to as an "aggressor gNB" and a base station that receives interference is referred to as a "victim gNB."

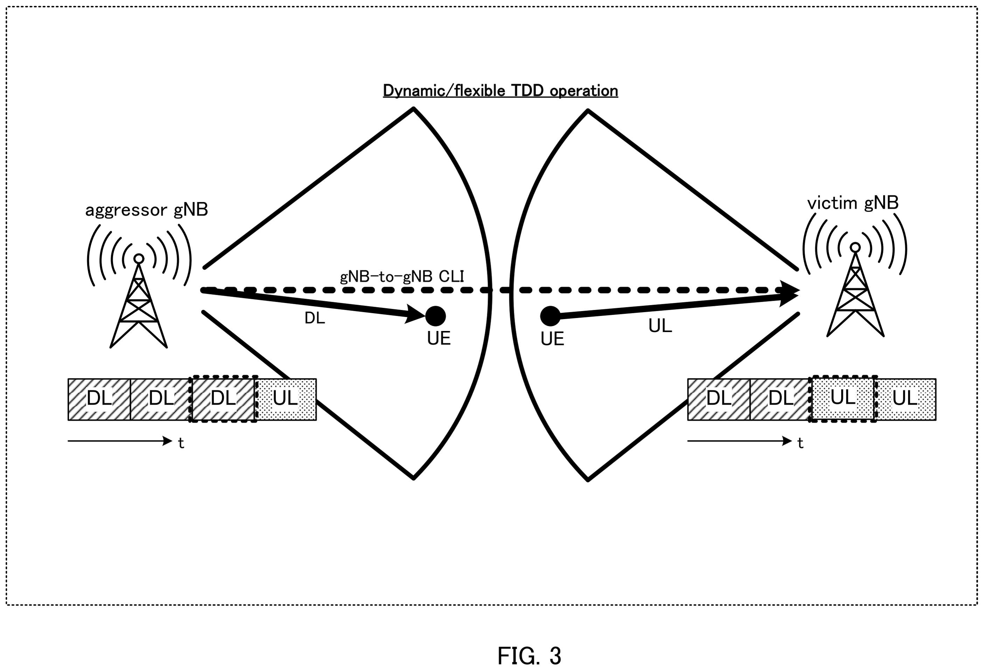

For example, in a Dynamic/flexible TDD operation, as illustrated in FIG. 3, there is a possibility that different base stations perform communication in different directions at the same time. In this case, since the base station (in FIG. 3, victim gNB) that performs UL reception possibly receives CLI from the base station (in FIG. 3, aggressor gNB) that performs DL transmission, there is a possibility that the reception performance of UL degrade in the base station that performs UL reception.

Examples of a method for avoiding such interference include a method in which the victim gNB measures CLI between the base stations, shares the measurement result between the base stations (e.g., between aggressor gNB and victim gNB), and avoids the CLI between the base stations through scheduling or the like.

### [Regarding CLI Measurement Method]

A method for measuring CLI between base stations will be described.

For example, an aggressor gNB transmits a DL channel or signal for measurement (hereinafter, may be referred to as "measurement DL channel or signal"), and a victim gNB receives the measurement DL channel or signal and performs CLI measurement. In this case, in order for the victim gNB to know (or to receive) a configuration of the measurement DL channel or signal of the aggressor gNB, for example, information related to the measurement DL channel or signal may be shared between the base stations in advance.

The victim gNB receives a UL channel or signal from a terminal that belongs to the victim gNB simultaneously with reception and measurement of the measurement DL channel or signal in some case. In this case, a CLI measurement value between the base stations is a value including the UL channel or signal, and there is a possibility that the victim gNB cannot accurately measure the CLI between the base stations.

Examples of a method for improving the measurement accuracy of CLI between base stations include application of a "UL muting resource" (also simply referred to as a muting resource) that performs no UL communication. For example, a victim gNB configures a UL muting resource for a terminal (e.g., terminal belonging to victim gNB) on the same resource as at least one of a time resource and a frequency resource (hereinafter, referred to as a time/frequency resource) to which a measurement DL channel or signal is mapped. The terminal belonging to the victim gNB performs no UL transmission on the configured UL muting resource, for example. Accordingly, the victim gNB can accurately measure the CLI measurement value between the base stations by using the measurement DL channel or signal and thus excluding the influence from UL.

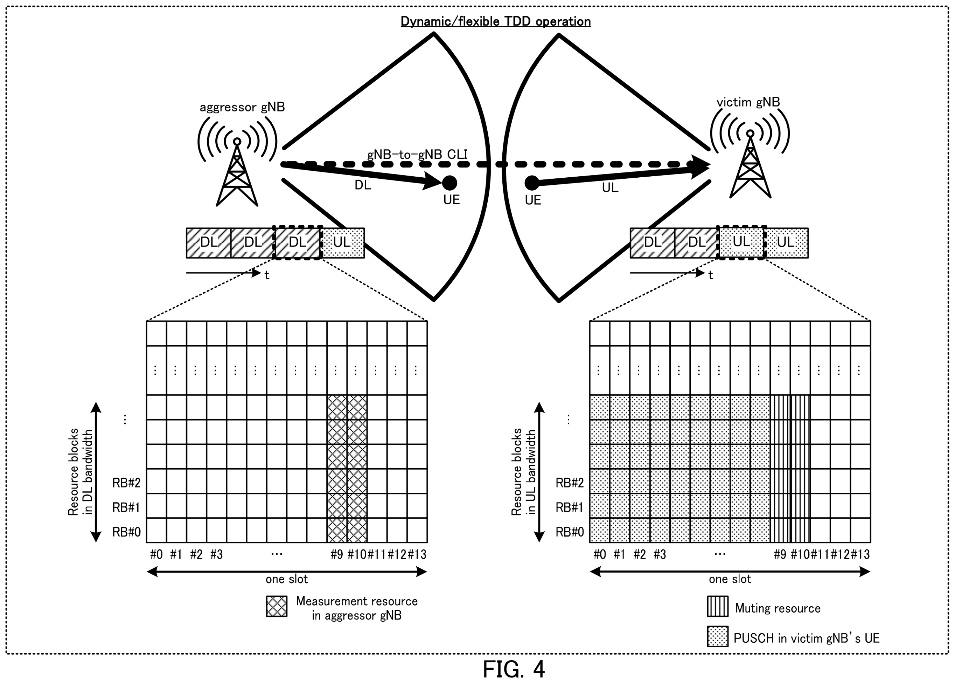

FIG. 4 is a diagram illustrating a use example of a UL muting resource. In FIG. 4, the aggressor gNB transmits a measurement DL channel or signal in symbols #9 and #10. Further, as illustrated in FIG. 4, a UL muting resource is allocated for the terminal belonging to the victim gNB on the same resource as the measurement resource in the aggressor gNB. The terminal belonging to the victim gNB transmits no uplink data (e.g., Physical Uplink Shared Channel (PUSCH)) in the muting resource of symbols #9 and #10. Further, as illustrated in FIG. 4, the victim gNB receives the measurement DL channel or signal on the muting resource and measures the CLI between the base stations. Accordingly, the victim gNB can measure, using the measurement DL channel or signal, the CLI value between the base stations without including the influence of the UL signal from the UE.

Here, a Transparent scheme and a Non-transparent scheme are assumed for UL muting resources.

In the Transparent scheme, a muting resource is implicitly configured through scheduling of a base station. For example, the base station schedules a UL resource for a terminal while avoiding a resource to be muted. Accordingly, the information related to the muting resource is not indicated to the terminal.

In the Non-transparent scheme, information (e.g., configuration) related to the muting resource is indicated to the terminal from the base station. The terminal configures (or specifies) the muting resource based on the indicated information and neither allocates a UL channel nor signal to the muting resource.

There has been no sufficient discussion on a muting resource configuration and indication method in the Non-transparent scheme, for example. In one non-limiting embodiment of the present disclosure, a description will be given of a muting resource configuration and indication method in the Non-transparent scheme.

### [Regarding Allocation of Muting Resource]

As one example, allocation of a muting resource in units of subcarriers unit will be described.

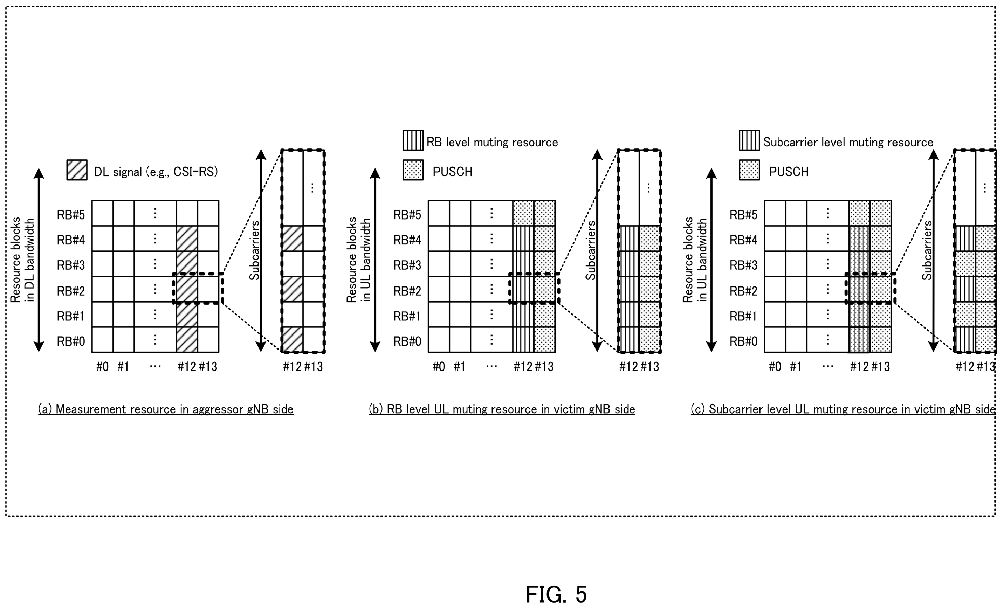

FIG. 5 is a diagram illustrating exemplary measurements of CLI between base stations using muting resources.

In FIG. 5, (a) illustrates an exemplary allocation of a resource (e.g., measurement resource) for a DL channel or signal (e.g., measurement DL channel or signal) in an aggressor gNB. The DL channel or signal may be, for example, Channel State Information - Reference Signal (CSI-RS). In FIG. 5, the left side of (a) illustrates an allocation in units of resource blocks (RBs) and the right side of (a) illustrates allocation in units of resource elements (REs). For example, the right side of (a) in FIG. 5 illustrates allocation in units of subcarriers in frequency domain.

In FIG. 5, (b) illustrates an exemplary allocation of a UL resource (e.g., a PUSCH resource) and a muting resource in units of RBs in a victim gNB. Further, in FIG. 5, (c) illustrates an exemplary allocation of a UL resource (e.g., PUSCH resource) and a muting resource in units of subcarriers (or in units of REs) in the victim gNB.

As illustrated in (b) and (c) in FIG. 5, the muting resources in units of RBs and units of subcarriers mute a measurement resource region of an aggressor gNB (e.g., not used for UL communication (PUSCH transmission)), so that the victim gNB can accurately measure the CLI between the base stations by using the signal of the measurement resource.

For example, as illustrated in (b) of FIG. 5, in allocation of a muting resource in units of RBs, a resource including a resource element having no relationship with the measurement resource illustrated in (a) of FIG. 5 is included in the muting resource. Therefore, since the UL communication can be muted even in the resource element having no relationship with the measurement resource, there is a possibility that the resource utilization efficiency is reduced.

Meanwhile, for example, as illustrated in (c) of FIG. 5, in allocation of a muting resource in units of subcarriers, the resource element having a relationship with the measurement resource illustrated in (a) of FIG. 5 is included in the muting resource, and the resource element having no relationship with the measurement resource is not included in the muting resource. Therefore, since the resource element having no relationship with the measurement resource can be allocated to UL communication, the resource utilization efficiency can be improved in units of resource elements.

As described above, in order to improve the resource utilization efficiency and allocate a resource to PUSCH, an indication method for a muting resource in units of subcarriers is anticipated.

### (Embodiment 1)

### [Overview of Communication System]

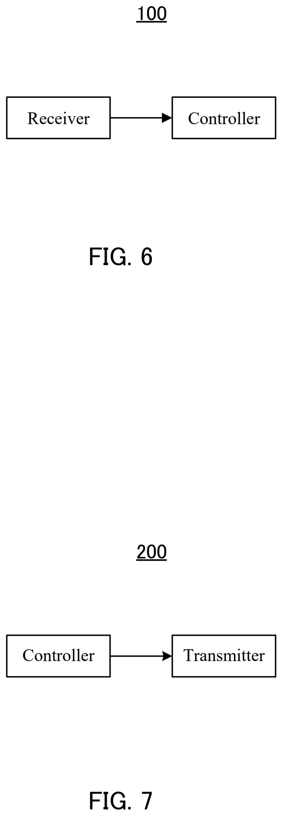

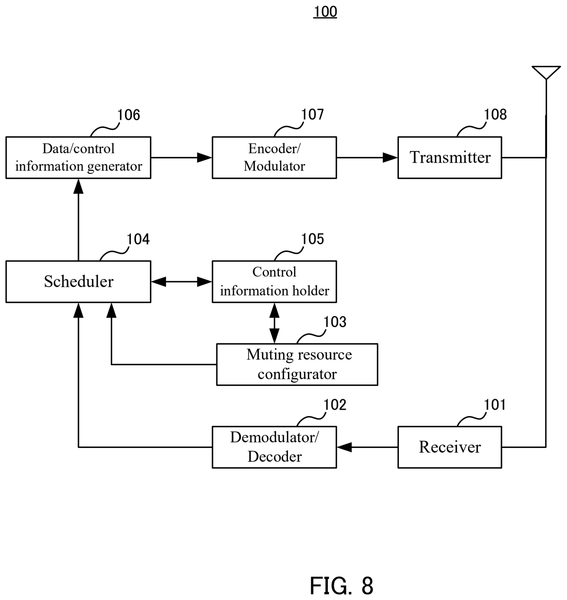

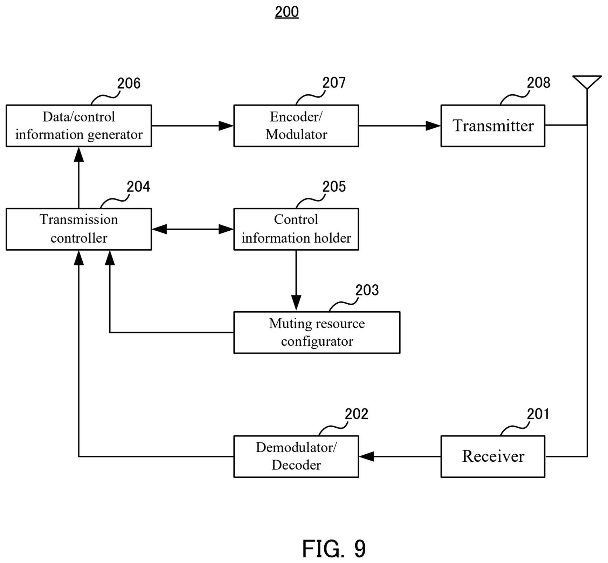

A communication system according to one aspect of the present disclosure may include, for example, base station 100 (e.g., gNB) illustrated in FIGS. 6 and 8 and terminal 200 (e.g., UE) illustrated in FIGS. 7 and 9. A plurality of base stations 100 and a plurality of terminals 200 may be present in the communication system.

FIG. 6 is a block diagram illustrating an exemplary configuration of a part of base station 100 according to one aspect of the present disclosure. In base station 100 illustrated in FIG. 6, a controller (e.g., corresponding to control circuitry) configures, in a first frequency resource allocated to uplink transmission in a certain time resource, a second frequency resource (e.g., muting resource) that performs no uplink transmission. A receiver (e.g., corresponding to reception circuitry) performs uplink reception based on the second frequency resource.

FIG. 7 is a block diagram illustrating an exemplary configuration of a part of terminal 200 according to one aspect of the present disclosure. In terminal 200 illustrated in FIG. 7, a controller (e.g., corresponding to control circuitry) configures, based on indication information, in a first frequency resource allocated to uplink transmission in a certain time resource, a second frequency resource (e.g., muting resource) that performs no uplink transmission. A transmitter (e.g., corresponding to transmission circuitry) performs uplink transmission based on the second frequency resource.

### [Configuration of Base Station]

FIG. 8 is a block diagram illustrating an exemplary configuration of base station 100 according to one aspect of the present disclosure. In FIG. 8, base station 100 includes receiver 101, demodulator/decoder 102, muting resource configurator 103, scheduler 104, control information holder 105, data/control information generator 106, encoder/modulator 107, and transmitter 108.

For example, at least one of demodulator/decoder 102, muting resource configurator 103, scheduler 104, control information holder 105, data/control information generator 106, and encoder/modulator 107 may be included in the controller illustrated in FIG. 6, and receiver 101 may be included in the receiver illustrated in FIG. 6.

For example, receiver 101 performs reception processing, such as down-conversion or A/D conversion on the received signal received via an antenna, and outputs the received signal after the reception processing to demodulator/decoder 102.

For example, demodulator/decoder 102 demodulates and decodes the received signal input from receiver 101 and outputs the decoding result to scheduler 104.

Muting resource configurator 103 configures a muting resource. For example, muting resource configurator 103 may configure a muting resource based on information from another base station. For example, muting resource configurator 103 may configure a muting resource based on control information (e.g., a configuration related to a CLI measurement resource between base stations) input from control information holder 105. Muting resource configurator 103 outputs information related to the muting resource thus configured (e.g., an allocation pattern of the muting resource) to scheduler 104.

Scheduler 104 may perform scheduling for terminal 200, for example. Scheduler 104, for example, performs scheduling for transmission and reception of each terminal 200 based on at least one of the decoding result input from demodulator/decoder 102, the information related to the muting resource input from muting resource configurator 103, and the control information input from control information holder 105, and instructs data/control information generator 106 to generate at least one of data and control information.

Control information holder 105 holds, for example, control information related to a configuration of a measurement resource between base stations (e.g., an allocation resource) and a configuration of a muting resource (e.g., an allocation pattern and an indication method). Control information holder 105 may output the held information to each component (e.g., muting resource configurator 103 and scheduler 104) of base station 100 as necessary.

Data/control information generator 106 generates at least one of data and control information in accordance with the instruction from scheduler 104 and outputs a signal including the generated data or control information to encoder/modulator 107, for example. Note that the generated data and control information may include at least one of higher-layer signaling information and downlink control information.

Encoder/modulator 107 encodes and modulates, for example, the signal input from data/control information generator 106 and outputs the modulated signal to transmitter 108.

Transmitter 108 performs transmission processing, such as D/A conversion, up-conversion, or amplification on the signal input from encoder/modulator 107, for example, and transmits a radio signal obtained by the transmission processing to terminal 200 through an antenna.

### [Configuration of Terminal]

FIG. 9 is a block diagram illustrating an exemplary configuration of terminal 200 according to one aspect of the present disclosure. In FIG. 9, terminal 200 includes receiver 201, demodulator/decoder 202, muting resource configurator 203, transmission controller 204, control information holder 205, data/control information generator 206, encoder/modulator 207, and transmitter 208.

For example, at least one of demodulator/decoder 202, muting resource configurator 203, transmission controller 204, control information holder 205, data/control information generator 206, and encoder/modulator 207 may be included in the controller illustrated in FIG. 7, and transmitter 208 may be included in the transmitter illustrated in FIG. 7.

For example, receiver 201 performs reception processing, such as down-conversion or A/D conversion on the received signal received via an antenna and outputs the received signal after the reception processing to demodulator/decoder 202.

Demodulator/decoder 202 demodulates and decodes the received signal input from receiver 201 and outputs the decoding result to transmission controller 204, for example.

Muting resource configurator 203 configures a muting resource based on control information (e.g., information related to configuration of the muting resource) input from control information holder 205. Muting resource configurator 203 outputs, for example, information related to the muting resource thus configured to transmission controller 204.

Transmission controller 204 outputs signaling information included in the decoding result input from demodulator/decoder 202 to control information holder 205. Further, transmission controller 204 may instruct data/control information generator 206 to generate at least one of data and control information based on, for example, the configuration information related to the muting resource input from muting resource configurator 203, the control information input from control information holder 205, or the decoding result (e.g., downlink control information) input from demodulator/decoder 202.

Control information holder 205 holds, for example, the control information (e.g., information related to configuration of the muting resource) input from transmission controller 204 and outputs the held information to each component (e.g., muting resource configurator 203 and transmission controller 204) as necessary.

Data/control information generator 206 generates data or control information, for example, in accordance with the instruction from transmission controller 204. Data/control information generator 206 outputs a signal including the generated data or control information to encoder/modulator 207.

Encoder/modulator 207 encodes and modulates the signal input from data/control information generator 206 and outputs the modulated transmission signal to transmitter 208, for example.

Transmitter 208 performs transmission processing, such as D/A conversion, up-conversion, and/or amplification on the signal input from encoder/modulator 207 and transmits a radio signal obtained by the transmission processing to base station 100 from an antenna, for example.

### [Operations of Base Station 100 and Terminal 200]

Exemplary operations of base station 100 and terminal 200 having the above configurations will be described.

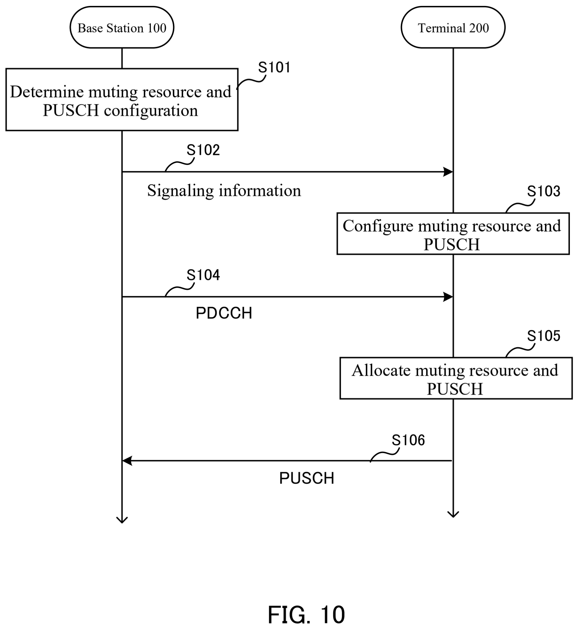

FIG. 10 is a sequence diagram illustrating exemplary operations of base station 100 and terminal 200.

In FIG. 10, base station 100 determines a configuration related to a muting resource and a UL channel or signal (e.g., PUSCH) (S101). Note that base station 100 may share, with another base station, the configuration of a measurement DL channel or signal of an aggressor gNB, for example (example will be described hereinafter).

Base station 100 transmits higher-layer signaling information including the configuration thus determined to terminal 200 (S102).

Terminal 200 configures the muting resource and PUSCH (e.g., UL resource) based on the configuration from base station 100 (S103).

Base station 100 transmits, for example, the control information related to PUSCH to terminal 200 (S104). The control information may be transmitted using, for example, a downlink control channel (e.g., Physical Downlink Control Channel (PDCCH)).

Terminal 200 receives PDCCH and specifies allocation of the muting resource and PUSCH resource based on the configuration of the muting resource, the configuration of PUSCH, and the control information included in the received PDCCH (S105).

Terminal 200 configures a muting resource that performs no UL transmission among resources allocated to UL transmission (PUSCH) in a certain time resource, based on indication information (e.g., at least one of higher-layer signaling information and downlink control information) from base station 100, for example.

Terminal 200 transmits PUSCH to base station 100 based on the specified allocation of the muting resource and PUSCH resource (S106). For example, terminal 200 transmits no PUSCH in the muting resource among the allocated PUSCH resources.

Base station 100 receives PUSCH transmitted from terminal 200 based on the configuration of the muting resource and PUSCH resource, for example. Further, base station 100 (e.g., victim gNB) may measure a CLI between base stations using a signal from an aggressor gNB based on the configuration of the muting resource. The measurement result of the CLI between the base stations may be shared by, for example, a plurality of base stations 100, and scheduling for terminal 200 may be performed based on the measurement result of the CLI between the base stations.

### [Regarding Configuration Method and Indication Method for Muting Resource]

Next, a description will be given of examples of a configuration method and an indication method for a muting resource according to one non-limiting embodiment of the present disclosure.

For example, a description will be given of a configuration and indication method for a muting resource by base station 100 (e.g., muting resource configurator 103 and scheduler 104), and an operation example of terminal 200 (e.g., muting resource configurator 203 and transmission controller 204).

In the present embodiment, as a configuration method for a muting resource, a bitmap format (configuration method 1 to be described, hereinafter) and a method for reusing a resource configuration for a reference signal (configuration method 2 to be described, hereinafter) will be described as examples. In the present embodiment, the indication information used for the configuration of a muting resource may be, for example, information related to a resource in units of subcarriers.

Further, in one example of the present disclosure, the configuration of a muting resource (e.g., configuration of a muting resource pattern) and the activation of a muting resource (e.g., enabling the configuration of a muting resource) may be indicated (or instructed and/or configured) to terminal 200, using the following channels or signals.

Note that a plurality of muting resource patterns (e.g., a plurality of pattern candidates) may be configured for terminal 200 as a configuration of a muting resource pattern, for example. In activation of a muting resource, for example, when the configuration of a muting resource is activated, the configuration may be enabled only a specified number of times (e.g., once) or may be repeatedly performed until the configuration is disabled.

### <Configuration by Radio Resource Control (RRC)/Medium Access Control (MAC) Signaling>

Base station 100 configures a plurality of muting resource patterns (e.g., pattern candidates) for terminal 200, using RRC signaling or MAC signaling. For example, each of the plurality of muting resource patterns may be managed by identifiable information (e.g., ID).

Terminal 200 receives RRC signaling or MAC signaling and specifies allocation of a muting resource based on the configuration of the muting resource included in the RRC signaling or MAC signaling.

As described above, configuring a muting resource, using RRC signaling or MAC signaling, makes it possible to configure a plurality of muting resource patterns appropriate to various measurement DL channels or signals.

Further, for example, dynamic activation using PDCCH (e.g., Group common PDCCH or UE specific PDCCH) may be applied in addition to the configuration of a muting resource pattern. For example, base station 100 may indicate the ID of a muting resource pattern, using a channel, such as PDCCH, thereby activating a specific muting resource pattern from among a plurality of muting resource patterns (pattern candidates) configured by RRC signaling or MAC signaling.

When a muting resource pattern is activated using Group common PDCCH, base station 100 can activate the muting resource pattern for a plurality of terminals 200 at once because the plurality of terminals 200 share the same PDCCH, for example. For this reason, the resource for PDCCH can be saved.

Further, when a muting resource pattern is activated using UE specific PDCCH, base station 100 can indicate, to terminal 200, activation of a muting resource pattern together with the scheduling for PUSCH (e.g., PDCCH), for example. For this reason, when the number of terminals 200 to which a muting resource is indicated is small, the resource utilization efficiency for PDCCH can be improved.

### <Configuration by Group common PDCCH>

Base station 100 configures a muting resource pattern for terminal 200, using Group common PDCCH.

Group common PDCCH can configure a larger number of bits than UE specific PDCCH. For this reason, it is possible to directly configure the configuration of a muting resource (e.g., bitmap format or resource configuration for a reference signal to be described, hereinafter), using Group common PDCCH.

Terminal 200 specifies allocation of a muting resource based on a muting resource configuration included in the received Group common PDCCH.

Group common PDCCH makes possible direct allocation of a muting resource, thus, allowing dynamic allocation of a muting resource, regardless of a muting resource pattern to be configured, as compared with another configuration method (e.g., a method using RRC signaling or MAC signaling).

Further, base station 100 can configure a plurality of muting resource patterns (pattern candidates), using Group common PDCCH and activate a specific muting resource pattern from among the plurality of muting resource patterns, using UE specific PDCCH, for example.

### <Configuration by UE Specific PDCCH>

Base station 100 configures a muting resource pattern for terminal 200, using UE specific PDCCH.

It is difficult to configure a large number of bits for a muting resource with UE specific PDCCH as compared with Group common PDCCH. For this reason, a plurality of muting resource patterns (e.g., a bitmap format to be described, hereinafter) may be defined (or specified and/or configured) in advance, for example. Base station 100 indicates, to terminal 200, the ID of the defined muting resource through UE specific PDCCH, thus allocating the muting resource for terminal 200. This is effective, for example, in a case where a time/frequency resource for measuring CLI between base stations is defined to some extent (e.g., in a case where the time/frequency resource is defined by specification).

The examples of channels or signals used for indicating a configuration of a muting resource and activation of the muting resource have been described thus far.

Next, examples of configuration method 1 (bitmap format) and configuration method 2 (method for reusing a resource configuration for a reference signal) for muting resources will be described.

### <Configuration Method 1>

In configuration method 1, a configuration of a muting resource pattern is formed by bitmap format.

Base station 100 configures, for example, a "subcarrier bitmap" representing an allocation pattern of muting resources in units of subcarriers for terminal 200. For example, the information indicated from base station 100 to terminal 200 is information in the bitmap format indicating whether or not each of a plurality of subcarriers included in the transmission bandwidth of terminal 200 is a muting resource. Terminal 200 specifies a subcarrier to which a muting resource is allocated, based on the subcarrier bitmap thus configured, for example.

For example, the subcarrier bitmap may be an array composed of binary values ("0" or "1") each corresponding to the subcarrier. For example, the subcarrier corresponding to the value "1" of the subcarrier bitmap may mean that the subcarrier is allocated as a muting resource, and the subcarrier corresponding to the value "0" of the subcarrier bitmap may mean that the subcarrier is not allocated as a muting resource. Note that, the meanings of "0" and "1" (relationship with the muting resource) may be reversed.

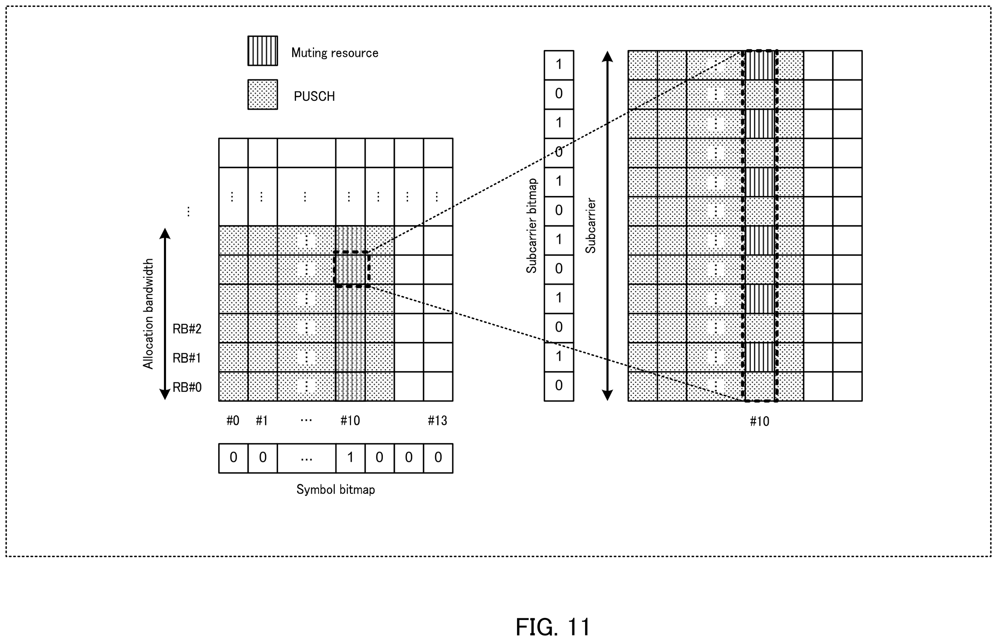

FIG. 11 illustrates an exemplary configuration of a muting resource pattern.

In FIG. 11, the subcarrier bitmap corresponds to the subcarriers in one resource block. In the example of FIG. 11, the number of bits (e.g., 12 bits) of the subcarrier bitmap corresponds to the number of subcarriers (e.g., 12 subcarriers) in one resource block.

Further, as illustrated in FIG. 11, an allocation bandwidth may be configured for terminal 200.

Further, as illustrated in FIG. 11, a "symbol bitmap" representing an allocation pattern of muting resources in units of symbols may be configured for terminal 200. The number of bits (e.g., 14 bits) of the symbol bitmap may correspond to the number of symbols (e.g., 14 symbols) in one slot and may correspond to the number of symbols in units of time resources different from slots.

In the example of FIG. 11, when a subcarrier bitmap, a symbol bitmap, and an allocation bandwidth are configured for terminal 200, terminal 200 configures (or specifies) a muting resource based on the bitmaps and the bandwidth. In the example of FIG. 11, terminal 200 configures six subcarriers corresponding to the values "1" of the subcarrier bitmap in each of the resource blocks included in the allocation bandwidth of symbol #10, as the muting resource.

Further, in the example of FIG. 11, terminal 200 does not configure the subcarriers corresponding to the values "0" of the subcarrier bitmap, in each of the resource blocks included in the allocation bandwidth of symbol #10, as the muting resource. Terminal 200 may configure the subcarriers corresponding to the values "0" of the subcarrier bitmap as a PUSCH resource.

As illustrated in FIG. 11, configuring a muting resource, using a subcarrier bitmap (e.g., indication of subcarrier-based unavailable resource) allows allocation of a muting resource in units of subcarriers (or resource elements) in the allocated bandwidth (e.g., PUSCH resource) for terminal 200, for example. Accordingly, for example, terminal 200 can use the subcarriers corresponding to the values "0" of the subcarrier bitmap for PUSCH transmission and simultaneously allocate PUSCH and a muting resource in a certain symbol, thereby improving the frequency resource utilization efficiency.

Further, as illustrated in FIG. 11, configuring a muting resource, using a symbol bitmap allows configuration of a muting resource in units of symbols (or resource elements), thereby making it possible to improve the time resource utilization efficiency.

Further, for example, in addition to the subcarrier bitmap, base station 100 may configure a "resource block bitmap (RB bitmap)" representing an allocation pattern of muting resources in units of resource blocks (RBs) for terminal 200.

Terminal 200 specifies a subcarrier to which a muting resource is allocated, based on the RB bitmap and subcarrier bitmap thus configured, for example.

For example, the RB bitmap may be an array composed of binary values ("0" or "1") each corresponding to an RB. For example, the RB corresponding to the value "1" of the RB bitmap may mean that the RB is allocated as a muting resource, and the RB corresponding to the value "0" of the RB bitmap may mean that the RB is not allocated as a muting resource. The meanings of "0" and "1" (relationship with the muting resource) may be reversed.

Further, for example, a subcarrier bitmap may be applied to an RB having the value "1" of the RB bitmap. For example, terminal 200 may configure a subcarrier having the value "1" of the subcarrier bitmap in the RB having the value "1" of the RB bitmap as a muting resource.

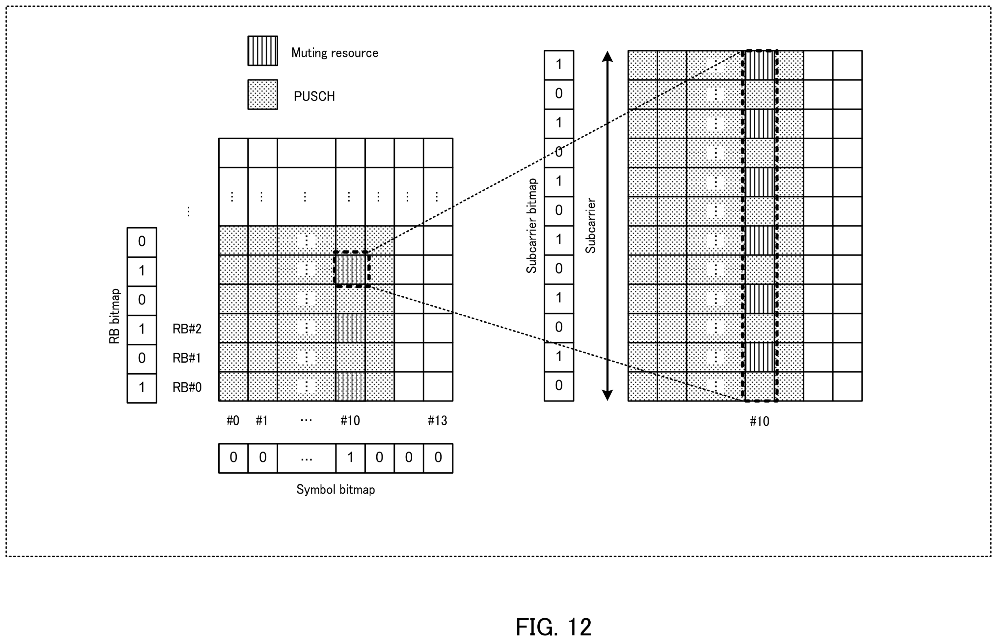

FIG. 12 illustrates an exemplary configuration of a muting resource pattern.

In FIG. 12, the RB bitmap corresponds to resource blocks in a certain bandwidth (e.g., allocation bandwidth).

Further, in FIG. 12, the subcarrier bitmap corresponds to subcarriers in one resource block. In the example of FIG. 12, the number of bits (e.g., 12 bits) of the subcarrier bitmap corresponds to the number of subcarriers (e.g., 12 subcarriers) in one resource block.

Further, in FIG. 12, a symbol bitmap is configured.

In the example of FIG. 12, when an RB bitmap, a subcarrier bitmap, and a symbol bitmap are configured for terminal 200, terminal 200 configures (or specifies) a muting resource, based on these bitmaps. In the example of FIG. 12, terminal 200 configures six subcarriers corresponding to the values "1" of the subcarrier bitmap, in each of the RBs corresponding to the values "1" of the RB bitmap in the RBs of symbol #10, as a muting resource.

Further, in the example of FIG. 12, terminal 200 does not configure the subcarriers corresponding to the values "0" of the subcarrier bitmap in each of the RBs corresponding to the values "0" of the RB bitmap among the RBs of symbol #10 and the RBs corresponding to the values "1" of the RB bitmap among the RBs of symbol #10, as a muting resource. Terminal 200 may configure these RBs and subcarriers as a PUSCH resource.

As illustrated in FIG. 12, configuring a muting resource, using the RB bitmap and subcarrier bitmap allows allocation of a muting resource in units of RBs and units of subcarriers (or resource elements) in the allocated bandwidth (e.g., PUSCH resource) for terminal 200, for example. Accordingly, for example, terminal 200 can use the resource corresponding to the values "0" of the RB bitmap and the subcarrier bitmap for PUSCH transmission and can simultaneously allocate PUSCH and a muting resource in a certain symbol, thereby making it possible to improve the frequency resource utilization efficiency.

Further, as illustrated in FIG. 12, configuring a muting resource, using the symbol bitmap allows configuration of a muting resource in units of symbols (or resource elements), thereby making it possible to improve the time resource utilization efficiency.

As described above, according to configuration method 1, indication of a muting resource, using a bit map format makes it possible to flexibly configure various patterns of muting resources in both the frequency direction and the time direction, thereby making it possible to improve the efficiency of allocation of a PUSCH resource.

In FIGS. 11 and 12, the number of bits of a subcarrier bitmap may not correspond to the number of subcarriers in one resource block. For example, the number of bits of a subcarrier bitmap may correspond to the number of subcarriers included in a plurality of RBs. For example, a muting resource may be configured by a 120-bit subcarrier bitmap representing a muting resource pattern for 10 RBs (e.g., 120 subcarriers).

Further, for example, in FIGS. 11 and 12, a description has been given of a case where one bit of a subcarrier bitmap corresponds to one subcarrier, but the present disclosure is not limited thereto, and one bit may correspond to a plurality of subcarriers. Likewise, one bit of the RB bitmap in FIG. 12 may correspond to one RB or a plurality of RBs. Further, one bit of the symbol bitmaps in FIGS. 11 and 12 may correspond to one symbol or a plurality of symbols.

Further, in configuration method 1, a description has been given of a configuration of a muting resource by a bitmap format, but indication of a muting resource is not limited to the indication of a bitmap format. For example, as the indication of a muting resource, a start position of a resource (e.g., at least one of subcarrier, resource block and symbol) and a resource size (e.g., the number of subcarriers, resource blocks, or symbols, the size or length) may be indicated.

Further, in configuration method 1, a configuration using a subcarrier bitmap (e.g., FIG. 11) and a configuration using a subcarrier bitmap and a resource block bitmap (e.g., FIG. 12) have been described, but the present disclosure is not limited thereto. For example, a muting resource may be configured using a resource block bitmap and/or may be configured using a bitmap in unit of frequency resources different from subcarriers and resource blocks.

Further, in configuration method 1, a muting resource may be configured based on a bitmap format and another parameter. For example, a muting resource may be configured using an offset of a resource block. Base station 100 indicates (or configures), to terminal 200, for example, an offset value of a resource block and bitmap format information (e.g., bitmap for at least one of a subcarrier, RB, and symbol). For example, the offset value and the bitmap format information may be indicated to terminal 200 by group common PDCCH (e.g., DCI format 2_4). For example, terminal 200 may configure a band excluding a range from a reference RB position to an RB position offset based on the offset value in an allocated band, as a muting resource configuration target. For example, an RB bitmap may be configured for an RB corresponding to a band of the muting resource configuration target.

### <Configuration Method 2>

In configuration method 2, a configuration of a muting resource is configured by reusing a resource configuration for a reference signal.

Base station 100 configures, for example, a resource allocation configuration for a reference signal (e.g., an allocated symbol or allocated band) for terminal 200. For example, the information indicated from base station 100 to terminal 200 is information indicating an allocated resource configuration for a reference signal. Terminal 200 configures a muting resource based on, for example, the resource allocation configuration for the reference signal thus configured.

The reference signal may be, for example, a Sounding Reference Signal (SRS), a Channel State Information Reference Signal (CSI-RS), or a Demodulation Reference Signal (DMRS).

The existing resource configuration for a reference signal can be flexibly configured in units of subcarriers by a plurality of parameters. For example, in case of an SRS, parameters, such as comb and frequency hopping, can be configured. Therefore, in the configuration of a muting resource by reusing a resource configuration for a reference signal, it is possible to flexibly configure the muting resource in units of subcarriers. Further, in configuration method 2, the existing resource configuration or signaling (e.g., trigger of SRS or CSI-RS) of a reference signal is reused, so that it is possible to reduce the overhead of RRC signaling and DCI for the muting resource.

Hereinafter, a configuration method of the muting resource in a case where the resource configuration for each reference signal (SRS, CSI-RS, and DMRS) in the configuration method 2 is reused will be described.

### <Configuration Method 2-1>

In configuration method 2-1, a configuration of a muting resource is configured by reusing a resource configuration for an SRS.

Base station 100 configures a resource configuration for an SRS for terminal 200. Terminal 200 specifies allocation of a muting resource based on the resource configuration for the SRS thus configured.

For example, use of a muting resource (e.g., "muting resource") may be configured (e.g., newly added) in "usage" (parameter for defining usage of SRS resource) of the configuration for the SRS. The SRS resource of which the "usage" is "muting resource" is used for allocation of a muting resource.

Terminal 200 specifies allocation of a muting resource by using, for example, the configuration for an SRS resource of which the "usage" of the SRS resource configuration thus configured is "muting resource." For example, in a case where the "usage" is "muting resource," terminal 200 configures an allocated SRS resource as a muting resource and transmits no SRS (mutes UL transmission).

Further, for example, a resource allocation parameter (e.g., comb and frequency hopping), a resource type (e.g., behavior of the resource in time domain, such as periodic, semi-periodic, or non-periodic), a trigger method (e.g., non-periodic SRS resource is triggered by DCI), and the like of an SRS can be reused for allocation of a muting resource.

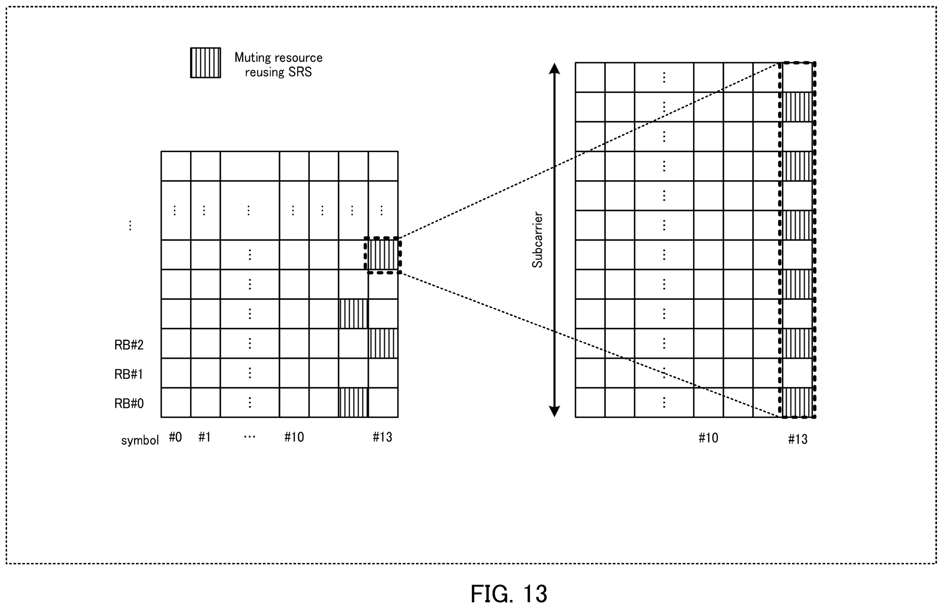

FIG. 13 illustrates an exemplary configuration of a muting resource pattern reusing a resource configuration for an SRS in configuration method 2-1. As illustrated in FIG. 13, a muting resource is allocated using an SRS resource configuration.

In configuration method 2-1, the existing resource configuration or signaling of an SRS is reused, so that many RRC parameters for configuration of a muting resource do not have to be defined. Further, for example, a trigger method of the SRS can be reused for activation of the muting resource by DCI, so that a new field does not have to be added in DCI.

### <Configuration Method 2-2>

In configuration method 2-2, a configuration of a muting resource is formed by reusing a resource configuration for a CSI-RS.

Base station 100 configures the resource configuration for a CSI-RS for terminal 200. Terminal 200 specifies allocation of a muting resource based on the resource allocation of the CSI-RS resource configuration thus configured.

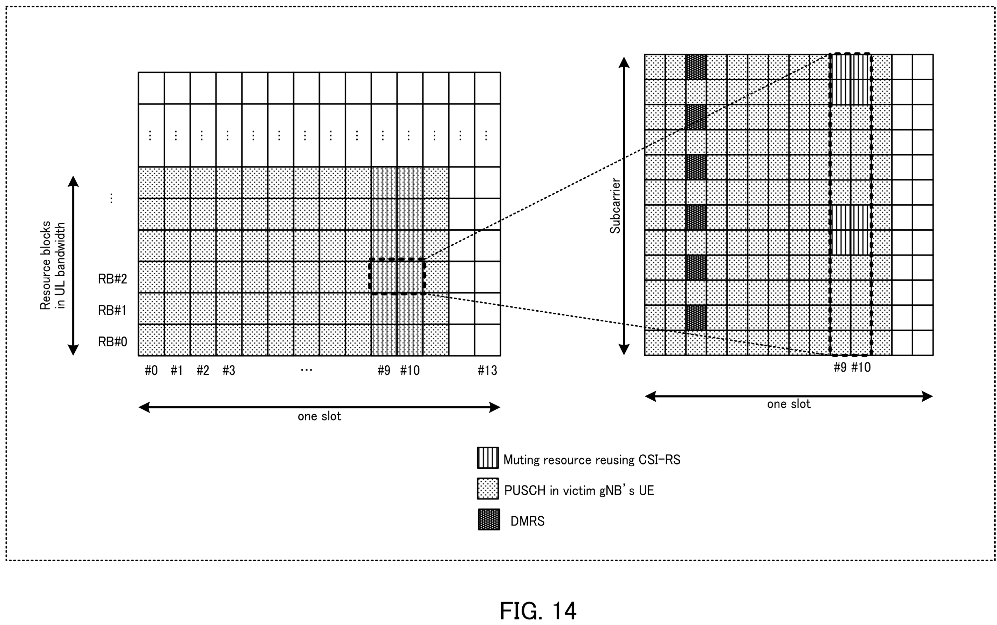

FIG. 14 illustrates an exemplary configuration of a muting resource pattern reusing a CSI-RS resource configuration in configuration method 2-2.

The CSI-RS resource configuration includes, for example, "no CDM," "CDM2," "FD-CDM2," "CDM4," and "CDM8" as a Code Division Multiplexing (CDM) pattern. In the example of FIG. 14, the CDM pattern is "CDM4" (e.g., time multiplexing of two symbols (symbols #9 and #10 in FIG. 14) and frequency multiplexing of two subcarriers), and allocation of a muting resource reusing the resource allocation of CSI-RS, which is a periodical allocation in the frequency direction, is configured. For example, terminal 200 configures the allocated CSI-RS resource as a muting resource and performs no UL transmission (muting) in the muting resource.

The CDM pattern reused for a configuration of a muting resource is not limited to "CDM4" and may be another CDM pattern.

For example, in the configuration of a muting resource reusing the resource allocation of an SRS, it is difficult to collectively configure a plurality of resource elements such as "CDM4" illustrated in FIG. 14 as a muting resource, whereas in the configuration of a muting resource reusing the resource allocation of a CSI-RS, a plurality of resource elements can be collectively configured as a muting resource by a plurality of CDM patterns. Accordingly, in configuration method 2-2, the muting resource can be flexibly configured as compared with the configuration of a muting resource reusing the resource allocation of an SRS.

Further, the configuration of a muting resource reusing a CSI-RS configuration and a trigger method include the following two methods.

The first method is a method in which the CSI-RS configuration for a muting resource is configured for terminal 200 and the muting resource is configured using the existing trigger method for a CSI-RS. For example, a resource allocation parameter (e.g., CDM pattern), a resource type (e.g., behavior of a resource in time domain such as periodic, semi-periodic, or non-periodic), a trigger method (e.g., a non-periodic CSI-RS resource is triggered by DCI), and the like of the CSI-RS can be reused for allocation of a muting resource. In this method, the existing resource configuration and signaling of a CSI-RS are reused, so that many RRC parameters for a muting resource do not have to be newly defined.

The second method is a method in which a CSI-RS configuration for a muting resource is configured in an SRS resource configuration and the SRS resource configuration is configured for terminal 200. In this case, for example, "muting resource" may be configured in "usage" of the SRS resource configuration. Accordingly, allocation of a muting resource using the resource configuration for a CSI-RS is possible by reusing the trigger method for an SRS. In this method, the existing resource configuration and signaling of a CSI-RS are reused, so that many RRC parameters for a muting resource do not have to be newly defined. Further, the trigger method for an SRS can be reused for activation of a muting resource by DCI, so that a new field does not have to be added in DCI.

### <Configuration Method 2-3>

In configuration method 2-3, a configuration of a muting resource is formed by reusing a resource configuration for a DMRS.

Base station 100 configures a resource configuration for a DMRS for terminal 200. For example, base station 100 configures at least a part of a resource configured by the resource configuration for a DMRS as a muting resource. Terminal 200 specifies allocation of the muting resource based on the resource configuration for the DMRS thus configured.

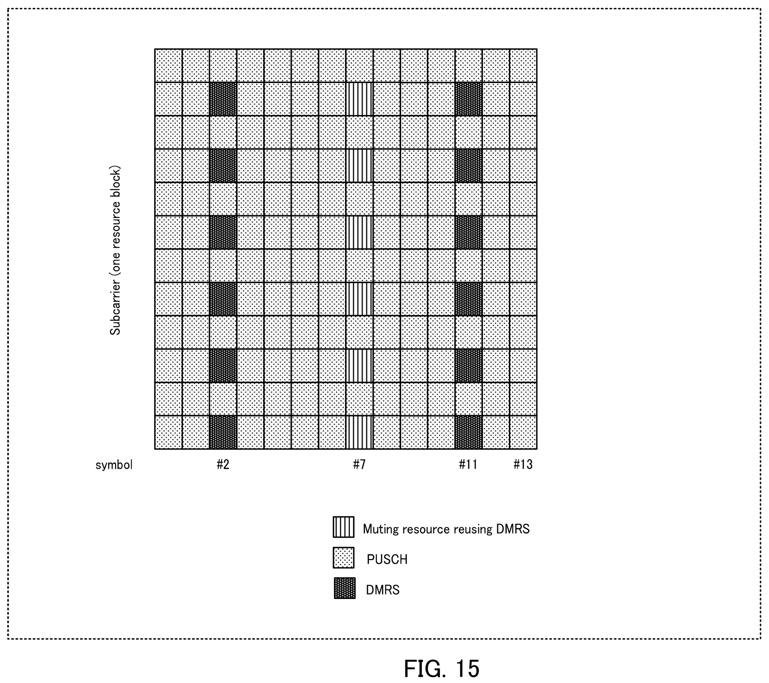

FIG. 15 illustrates an exemplary configuration of a muting resource pattern reusing a resource configuration for a DMRS in configuration method 2-3. In FIG. 15, the resource configuration for a DMRS is a configuration for allocating a DMRS to symbols #2, #7, and #11 in single-symbol DMRS. Further, in FIG. 15, a configuration in which the DMRS of symbol #7 is configured as a muting resource is defined in DMRS configuration. In this case, as illustrated in FIG. 15, the resource of the DMRS of symbol #7 is allocated as a muting resource. Accordingly, in FIG. 15, no DMRS is mapped in symbol #7. For example, terminal 200 configures a resource of symbol #7 among the allocated DMRS resources as the muting resource and transmits no DMRS (e.g., mutes UL transmission) in the muting resource.

In configuration method 2-3, the existing resource configuration and signaling of a DMRS are reused, so that many RRC parameters for a muting resource do not have to be newly defined.

Note that, the resource configuration for a DMRS is not limited to the example illustrated in FIG. 15, and for example, the number of symbols, the symbol positions, the number of subcarriers, and the subcarrier positions where a DMRS is mapped may have other values. Further, in FIG. 15, a description has been given of the case where the muting resource is configured in one symbol among the symbols configured by the resource configuration for a DMRS, but the present disclosure is not limited thereto, and the muting resource may be configured in a plurality of symbols where a DMRS is configured.

Further, the configuration in which a DMRS is configured as a muting resource, and which is defined in a DMRS resource configuration is not limited to the example illustrated in FIG. 15. For example, in FIG. 15, a description has been given of the case where all subcarriers allocated to DMRS are allocated as a muting resource in some symbols among the plurality of symbols to which DMRS is mapped, but allocation of a muting resource is not limited thereto. For example, in some symbols among the plurality of symbols to which DMRS is mapped, some subcarriers to which DMRS is allocated may be allocated as a muting resource. Alternatively, in some subcarriers among the plurality of subcarriers to which the DMRS is allocated, a plurality of symbols to which DMRS is mapped may be allocated as a muting resource.

Configuration methods 1 and 2 for muting resources have been described thus far.

As described above, in the present embodiment, terminal 200 configures a muting resource in a PUSCH resource in a certain symbol based on indication information (e.g., resource information in units of subcarriers) from base station 100 and performs UL transmission based on the muting resource. In the present embodiment, a muting resource is allocated together with PUSCH by at least one indication of a semi-static indication and a dynamic indication, for example. Accordingly, the muting resource and the PUSCH resource can be allocated simultaneously, thereby making it possible to allocate a muting resource while avoiding a collision between resources. Therefore, according to the present embodiment, it is possible to configure a muting resource and to appropriately measure interference between base stations while improving the resource utilization efficiency.

### (Embodiment 2)

In the present embodiment, the configurations of base station 100 and terminal 200 may be the same configurations as those in Embodiment 1. Further, the configuration and activation of the muting resource pattern in the present embodiment may be the same as those in Embodiment 1. In the present embodiment, the configuration method of a muting resource is different from that in Embodiment 1.

### [Configuration Method for Muting Resources]

The configuration method for a muting resource according to the present embodiment is a method of reducing (or thinning out) a PUSCH resource or a configuration method based on shifting.

In the present embodiment, for example, a muting resource is configured by reducing a PUSCH allocation resource (e.g., resource block or symbol) or shifting a PUSCH allocation resource.

Base station 100 configures, for example, a parameter for a resource block or symbol to be reduced or shifted for terminal 200. Terminal 200 changes (reduces or shifts) allocation of PUSCH based on the configured parameter and configures a resource freed by the reduction or shift of the allocation of PUSCH as a muting resource, for example.

For example, a case where a shift parameter for a resource block is configured to 2 RBs will be described. In this case, the transmission bandwidth for PUSCH is reduced or shifted for two resource blocks. By the reduction or shift of the PUSCH resource, nothing is allocated to the resource for the two resource blocks. This freed resource is configured (or reserved) as a muting resource.

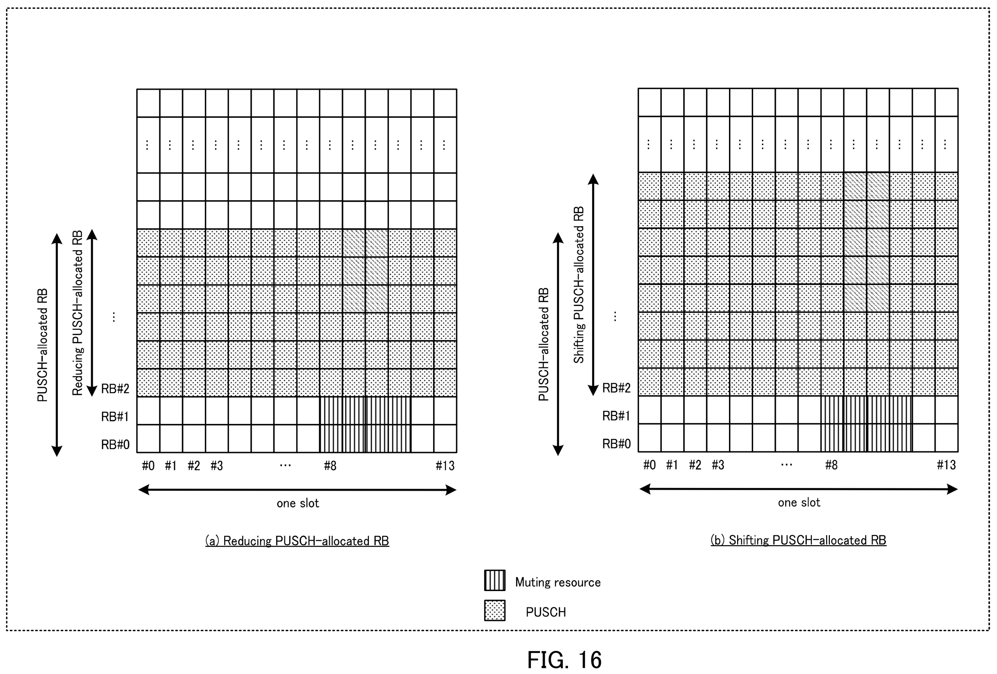

FIG. 16 illustrates an exemplary configuration of a muting resource based on the reduction and shift of PUSCH in the frequency region.

In FIG. 16, (a) illustrates an example in which a muting resource is configured by reducing a transmission bandwidth for PUSCH. For example, in (a) of FIG. 16, the transmission bandwidth for PUSCH is reduced for two resource blocks (e.g., two resource blocks of RB#0 and RB#1), and a muting resource is configured in the two resource blocks freed by the reduction of the transmission bandwidth for PUSCH.

Further, in FIG. 16, (b) illustrates an example in which a muting resource is configured by shifting a transmission bandwidth for PUSCH. For example, in (b) of FIG. 16, the transmission bandwidth for PUSCH is shifted for two resource blocks, and a muting resource is configured in two resource blocks (e.g., RB#0 and RB#1) freed by the shift of the transmission bandwidth for PUSCH.

In this manner, a muting resource is secured by reducing or shifting the transmission band for PUSCH.

Further, as illustrated in (a) and (b) of FIG. 16, in the symbols (e.g., 14 symbols) allocated to PUSCH, some or all of the symbols (symbols #8 to #11 in examples in (a) and (b) of FIG. 16) may be configured as a muting resource. The parameters (e.g., parameters for the number of symbols and symbol positions) for the symbols configured as the muting resource may be indicated to terminal 200.

As described above, in the present embodiment, terminal 200 configures a muting resource in the PUSCH resource in a certain symbol based on the indication information (e.g., parameter for resource block or symbol to be reduced or shifted) from base station 100 and performs UL transmission based on the muting resource. In the present embodiment, a muting resource is allocated together with PUSCH by at least one indication of a semi-static indication and a dynamic indication, for example. Accordingly, the muting resource and the PUSCH resource can be allocated simultaneously, thereby making it possible to allocate a muting resource while avoiding a collision between resources. Therefore, according to the present embodiment, it is possible to configure a muting resource and to appropriately measure interference between base stations while improving the resource utilization efficiency.

Further, in the configuration method for muting resources according to the present embodiment, for example, a PUSCH resource is reduced or shifted in the frequency direction (or frequency resource is changed likewise over a plurality of symbols), so that no inter-symbol transmission power (e.g., total power or power spectral density (PSD) in symbols) changes between symbols where a muting resource is configured (e.g., symbols #8 to #11 in FIG. 16) and symbols where no muting resource is configured (e.g., symbols different from symbols #8 to #11 in FIG. 16). Therefore, terminal 200 does not need to perform a new PUSCH transmission power control (e.g., PUSCH transmission power boost) for the allocation of the muting resource, so that it is possible to suppress further complication of the design of terminal 200.

Further, in the configuration method according to the present embodiment, a muting resource can be allocated to a configured grant (CG) PUSCH without a Dynamic grant (DG) PUSCH. For example, when base station 100 configures a CG PUSCH for terminal 200 and configures a muting resource in a CG PUSCH at a certain time (e.g., when CLI measurement of base station 100 and CG PUSCH transmission occur at the same time), base station 100 can change allocation of the CG PUSCH overlapping with the CLI measurement of base station 100 by using a parameter related to a resource block and symbol to be reduced or shifted. This can also be realized by changing the allocation of PUSCH using the DG PUSCH, but in the present embodiment, it is possible to allocate a muting resource and CG PUSCH without scheduling a dynamic grant.

Further, in the present embodiment, a muting resource may be configured by application of both reduction and shift of a PUSCH resource (transmission bandwidth).

Further, in the present embodiment, as illustrated in (a) of FIG. 16, a description has been given of a case where a PUSCH resource is reduced over all the symbols to which PUSCH is allocated, but the present disclosure is not limited thereto. For example, in a symbol configured as a muting resource among a plurality of symbols to which PUSCH is allocated, a PUSCH resource (e.g., RB) may be reduced, and no PUSCH resource may be reduced in a symbol not configured as a muting resource. Accordingly, it is possible to reduce the reduction of a PUSCH resource and thus to improve the resource utilization efficiency.

### (Other Embodiments)

### [Inter-Symbol PUSCH Transmission Power]

In the configuration of a muting resource according to Embodiment 1, the inter-symbol transmission power (e.g., total power or PSD in symbols) changes between a symbol to which a muting resource is allocated and a symbol to which no muting resource is allocated.

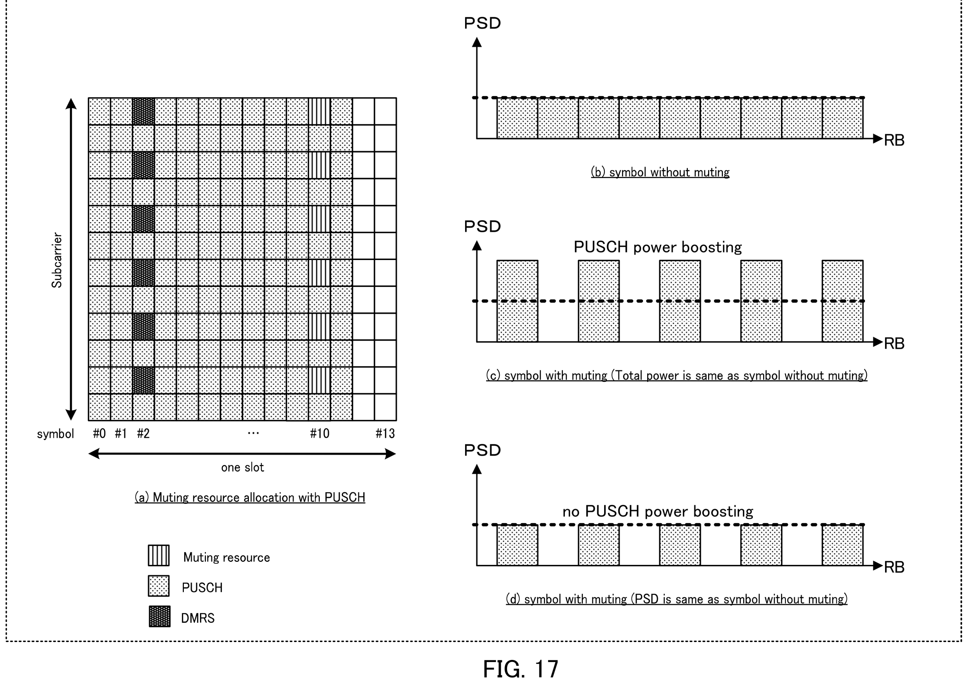

In FIG. 17, (a) illustrates an allocation example of a muting resource according to Embodiment 1. In (a) of FIG. 17, base station 100 allocates a muting resource to symbol #10. In FIG. 17, (b), (c), and (d) are diagrams for comparison of PSDs in the muting resource configuration illustrated in (a) of FIG. 17. In FIG. 17, (b) illustrates an example of the PSD of a symbol to which no muting resource is allocated, and (c) and (d) illustrate examples of the PSDs of a symbol to which a muting resource is allocated (e.g., symbol #10 illustrated in (a) of FIG. 17).

In a muting resource configuration, for example, the following two power control methods can be applied.

### <Method 1: Method for Matching Inter-Symbol Transmission Power>

In method 1, inter-symbol transmission power between a symbol to which a muting resource is allocated and a symbol to which no muting resource is allocated is matched. For example, in the symbol to which the muting resource is allocated, since no PUSCH is transmitted in some resources (e.g., subcarriers), the transmission power of PUSCH may be boosted. For example, as illustrated in (c) of FIG. 17, boosting the transmission power of PUSCH makes the total transmission power identical to the symbol to which no muting resource is allocated illustrated in (b) of FIG. 17. In method 1, since the transmission power between symbols is the same, no transition period (e.g., adjustment period for fluctuation in transmission power) may be configured.

### <Method 2: Method for Matching PSD between Symbols>

In method 2, inter-symbol PSD is matched between a symbol to which no muting resource is allocated and a symbol to which a muting resource is allocated. For example, in method 2, no transmission power boost for PUSCH is performed. For example, as illustrated in (d) of FIG. 17, the PSD of the symbol to which a muting resource is allocated is the same as the PSD of the symbol to which no muting resource is allocated, as illustrated in (b) of FIG. 17. In method 2, since the inter-symbol PSD is the same in PUSCH transmission, no Peak-to-Average Power Ratio (PAPR) requirement increases.

Methods 1 and 2 have been described thus far.

Further, the transmission power control (transmission power boost) of PUSCH in method 1 can reuse the power boost for DMRS in UL Multi-User-Multiple Input Multiple Output (MU-MIMO).

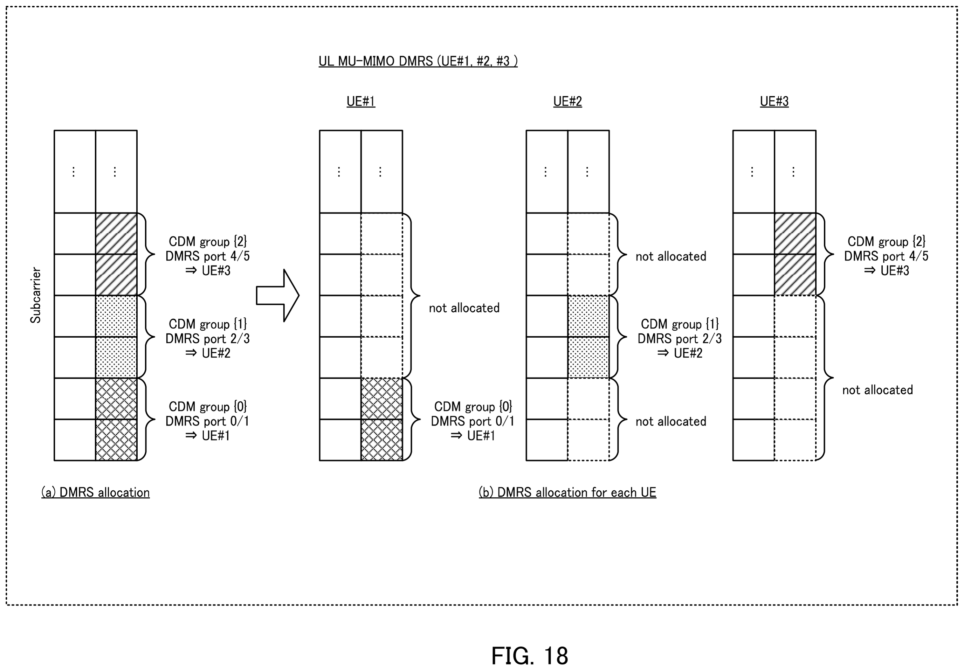

In FIG. 18, (a) illustrates an exemplary DMRS allocation in UL MU-MIMO, and (b) illustrates an exemplary DMRS allocation as viewed from each terminal 200 (e.g., UE#1, UE#2, and UE#3). In (a) of FIG. 18, CDM groups {0, 1, 2} are configured, the DMRS port of CDM group {0} is allocated to UE#1, the DMRS port of CDM group {1} is allocated to UE#2, and the DMRS port of CDM group {2} is allocated to UE#3.

In this case, as illustrated in (b) of FIG. 18, the DMRS port of CDM group {0} is allocated to UE#1 and the other CDM groups {1, 2} are allocated to the other terminals (UE#2 and UE#3), so that nothing is allocated to a resource corresponding to the CDM groups {1, 2} (e.g., neither PUSCH nor DMRS is allocated) for UE#1. UE#1 may boost the transmission power to the extent related to the resource to which no DMRS is allocated (e.g., resource corresponding to the CDM groups {1, 2}) in the resource corresponding to CDM group {0}. The transmission power control may be performed likewise in UE#2 and UE#3.

Reusing the power control of DMRS in UL MU-MIMO in PUSCH to which a muting resource is allocated makes it possible to allocate a muting resource in PUSCH in units of subcarriers.

### [Information Sharing of Reference Signal Configuration between Base Stations]

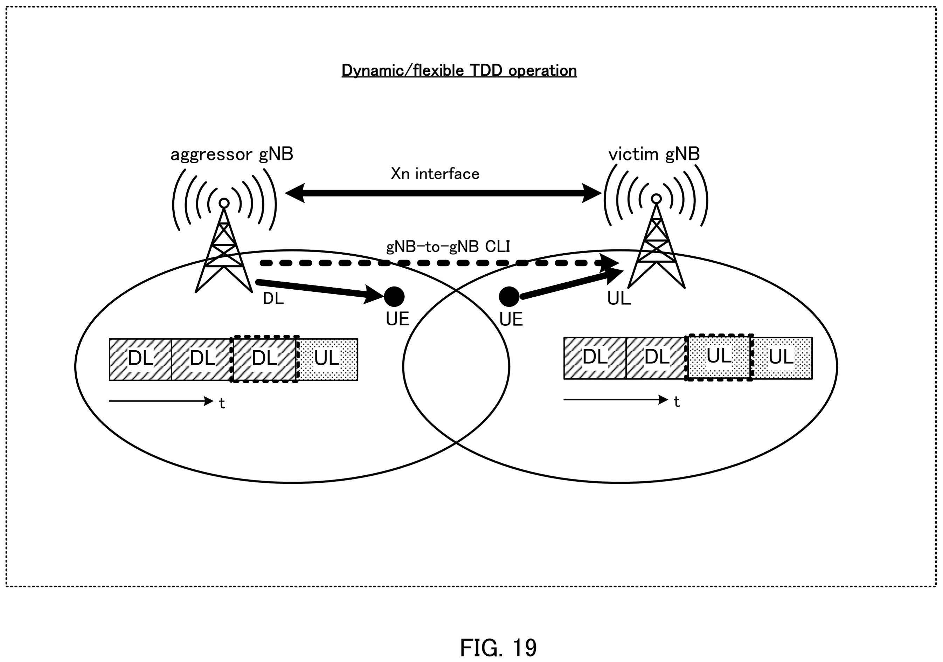

In CLI measurement between base stations, it is anticipated to share information between an aggressor gNB and a victim gNB. Examples include sharing of a measurement resource of an aggressor gNB in advance and sharing of an inter-base station CLI measurement value after measurement. The information sharing between base stations may be performed using an Xn interface as illustrated in FIG. 19, for example.

In one example of the present disclosure, a description has been given of a muting resource configuration method using a resource configuration for a reference signal in the UL muting resource indication method. The configuration for the reference signal (e.g., CSI-RS, SRS, DMRS, and the like) may be shared between an aggressor gNB and a victim gNB by using an Xn interface between base stations.

For example, transmission and reception of the following may be performed via an Xn interface: a CSI-RS configuration (e.g., ZP-CSI-RS-Resource, ZP-CSI-RS-ResourceSet, NZP-CSI-RS-Resource; NZP-CSI-RS-ResourceSet, CSI-RS-ResourceMapping, and the like), an SRS configuration (e.g., SRS-ResourceSet and SRS-Resource); or a DMRS configuration (e.g., DMRS-UplinkConfig).

Further, both a transparent scheme and a non-transparent scheme can be applied to the indication of a UL muting resource. For example, the configuration for a CSI-RS used in CLI measurement between base stations in an aggressor gNB is shared with a victim gNB by using an Xn interface, and the victim gNB can configure a UL muting resource using the shared configuration for CSI-RS (e.g., configuration via configuration method 2-2 of Embodiment 1). Sharing a configuration for a reference signal between base stations 100 via an Xn interface allows base stations 100 to allocate a muting resource using the configuration.

The information sharing of a reference signal configuration between base stations has been described thus far.

Note that, the parameters, such as the number of resources (the number of subcarriers, the number of RBs, or the number of symbols), the position and the pattern of a resource in which a muting resource is configured, and which are used in the embodiments described above are merely examples and are not limited.

Further, in each embodiment described above, a description has been given of cases where a muting resource is configured in the frequency region in units of subcarriers and in units of resource blocks, but the units of frequency resources in which a muting resource is configured are not limited thereto and may be other units. Further, a description has been given of a case where a muting resource is configured in the time domain in units of symbols, but the units of time resources in which a muting resource is configured is not limited thereto and may be other units.

Further, in each embodiment described above, a description has been given of a configuration of an uplink muting resource, but the present disclosure is not limited thereto, and a muting resource may be configured for another link, such as downlink or side-link.

Further, in each embodiment described above, a description has been given of PUSCH transmission as an example of UL transmission, but the UL channel or signal is not limited to PUSCH and may be another channel or signal.

Further, the muting described above may be rephrased as other terms, such as rate matching, blanking, and puncture.

### (Supplement)

Information indicating whether terminal 200 supports the functions, operations, or processes described in the above-described embodiments may be transmitted (or indicated) from terminal 200 to base station 100 as capability information or a capability parameter for terminal 200.

The capability information may include an information element (IE) individually indicating whether terminal 200 supports at least one of the functions, operations, or processes described in the above-described embodiments. Alternatively, the capability information may include an information element (IE) indicating whether terminal 200 supports a combination of any two or more of the functions, operations, or processes described in the above-described embodiments.

Base station 100 may determine (or assume) the function, operation, or process supported (or not supported) by terminal 200 of the transmission source of the capability information, based on the capability information received from terminal 200, for example. Base station 100 may perform an operation, processing, or control corresponding to a determination result based on the capability information. For example, base station 100 may control the configuration of a muting resource based on the capability information received from terminal 200.

Note that the fact that terminal 200 does not support some of the functions, operations, or processes described in the above-described embodiments may be read as that some of the functions, operations, or processes are limited in terminal 200. For example, information or a request on such limitation may be indicated to base station 100.

Information on the capability or limitation of terminal 200 may be defined, for example, in the standard, or may be implicitly indicated to base station 100 in association with information known to base station 100 or information transmitted to base station 100.

### (Control Signal)

In the present disclosure, the downlink control signal (or downlink control information) related to the exemplary embodiment of the present disclosure may be a signal (or information) transmitted of a Physical Downlink Control Channel (PDCCH) in a physical layer, for example, or may be a signal (or information) transmitted through a Medium Access Control Control Element (MAC CE) of the higher layer or the Radio Resource Control (RRC). Further, the signal (or information) is not limited to being indicated by the downlink control signal, and may be predefined in the specifications (or standard) or may be pre-configured in a base station and a terminal.

In the present disclosure, the uplink control signal (or uplink control information) related to the exemplary embodiment of the present disclosure may be, for example, a signal (or information) transmitted through a PUCCH of the physical layer or a signal (or information) transmitted through a MAC CE of the higher layer or the RRC. Further, the signal (or information) is not limited to being indicated by the uplink control signal and may be specified by the specifications (or standards) in advance or may be preconfigured in a base station and a terminal. Further, the uplink control signal may be replaced with, for example, uplink control information (UCI), 1st stage sidelink control information (SCI), or 2nd stage SCI.

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may play a role of a base station. Furthermore, instead of the base station, a relay apparatus that relays communication between a higher node and a terminal may be used. Moreover, a road side device may be used.

### (Uplink/Downlink/Sidelink)

One exemplary embodiment of the present disclosure may be applied to, for example, any of an uplink, a downlink, and a sidelink. For example, an exemplary embodiment of the present disclosure may be applied to uplink channels such as Physical Uplink Shared Channel (PUSCH), Physical Uplink Control Channel (PUCCH), and Physical Random Access Channel (PRACH), downlink channels such as Physical Downlink Shared Channel (PDSCH), PDCCH, and Physical Broadcast Channel (PBCH), or sidelink channels such as Physical Sidelink Shared Channel (PSSCH), Physical Sidelink Control Channel (PSCCH), and Physical Sidelink Broadcast Channel (PSBCH).

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a side link control channel and a side link data channel, respectively. Further, the PBCH and PSBCH are examples of broadcast channels, and the PRACH is an example of a random access channel.

### (Data channel/Control channel)

One exemplary embodiment of the present disclosure may be applied to, for example, any of data channels and control channel. For example, the channels in an exemplary embodiment of the present disclosure may be replaced with any of data channels including PDSCH, PUSCH, and PSSCH and/or control channels including PDCCH, PUCCH, PBCH, PSCCH, and PSBCH.

### (Reference Signal)

In one exemplary embodiment of the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In one exemplary embodiment of the present disclosure, time resource units are not limited to one or a combination of slots and symbols, and may be time resource units, such as frames, superframes, subframes, slots, time slot subslots, minislots, or time resource units, such as symbols, orthogonal frequency division multiplexing (OFDM) symbols, single carrier-frequency division multiplexing access (SC-FDMA) symbols, or other time resource units. The number of symbols included in one slot is not limited to any number of symbols exemplified in the embodiments described above, and may be other numbers of symbols.

### (Frequency Band)

One exemplary embodiment of the present disclosure may be applied to any of a licensed band and an unlicensed band.

### (Communication)

One exemplary embodiment of the present disclosure may be applied to any of communication between a base station and a terminal (Uu link communication), communication between a terminal and a terminal (Sidelink communication), and communication of a Vehicle to Everything (V2X). For example, the channel in an exemplary embodiment of the present disclosure may be replaced with the PSCCH, the PSSCH, the Physical Sidelink Feedback Channel (PSFCH), the PSBCH, the PDCCH, the PUCCH, the PDSCH, the PUSCH, or the PBCH.

Further, one exemplary embodiment of the present disclosure may be applied to any of a terrestrial network or a network other than a terrestrial network (NTN: Non-Terrestrial Network) using a satellite or a High Altitude Pseudo Satellite (HAPS). Further, an exemplary embodiment of the present disclosure may be applied to a network having a large cell size, and a terrestrial network with a large delay compared with a symbol length or a slot length, such as an ultra-wideband transmission network.

### (Antenna Port)

In one exemplary embodiment of the present disclosure, the antenna port refers to a logical antenna (antenna group) configured of one or more physical antennae. For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stacks>

3GPP has been working at the next release for the 5th generation cellular technology, simply called 5G, including the development of a new radio (NR) access technology operating in frequencies ranging up to 100 GHz. The first version of 5G standard was initially delivered in late 2017, which allows proceeding to trials and commercial deployments of 5G NR standard-compliant terminals, e.g., smartphones.

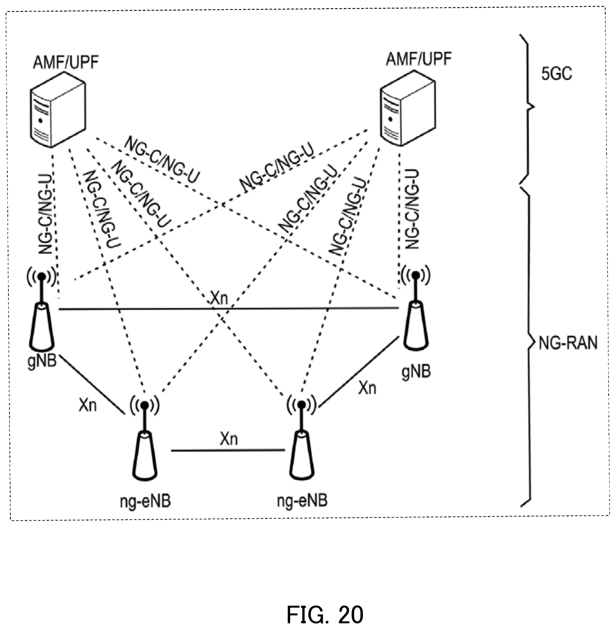

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 20 (see e.g., 3GPP TS 38.300 v15.6.0, section 4).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new access stratum (AS) sublayer (Service Data Adaptation Protocol: SDAP) is introduced above the PDCP (see, e.g., clause 6.5 of 3GPP TS 38.300). A control plane protocol stack is also defined for NR (see, e.g., TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For example, the Medium-Access-Control layer handles logical-channel multiplexing, and scheduling and scheduling-related functions, including handling of different numerologies.

The physical layer (PHY) is, for example, responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), massive machine type communication (mMTC), which have diverse requirements in terms of data rates, latency, and coverage. For example, the eMBB is expected to support peak data rates (20 Gbps for downlink and 10 Gbps for uplink) and user-experienced data rates in the order of three times what is offered by IMT-Advanced. Meanwhile, in a case of the URLLC, the tighter requirements are put on ultra-low latency (0.5 ms for each of UL and DL for user plane latency) and high reliability (1-10-5 within 1 ms). Finally, the mMTC may preferably require high connection density (1,000,000 devices/km² in an urban environment), large coverage in harsh environments, and extremely long-life battery for low cost devices (15 years).

Thus, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (also referred to as TTI) than an mMTC service. Furthermore, deployment scenarios with large channel delay spreads may preferably require a longer CP duration than scenarios with short delay spreads. The subcarrier spacing may be optimized accordingly to retain the similar CP overhead. NR may support more than one value of subcarrier spacing. Correspondingly, subcarrier spacing of 15 kHz, 30 kHz, 60 kHz ... are currently considered. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR, for each numerology and carrier, a resource grid of subcarriers and OFDM symbols is defined for each of uplink and downlink. Each element in the resource grid is called a resource element and is specified based on the frequency index in the frequency domain and the symbol position in the time domain (see 3GPP TS 38.211 v15.6.0).

### <5G NR Functional Split between NG-RAN and 5GC>

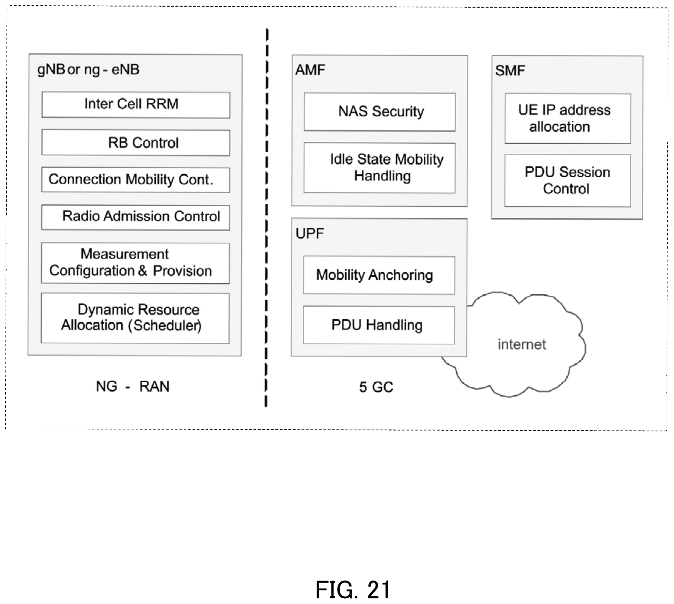

FIG. 21 illustrates functional split between NG-RAN and 5GC. An NG-RAN logical node is a gNB or ng-eNB. The 5GC has logical nodes AMF, UPF, and SMF.

For example, the gNB and ng-eNB host the following main functions:
- Functions for radio resource management such as radio bearer control, radio admission control, connection mobility control, dynamic allocation (scheduling) of resources to UEs in both uplink and downlink;
- IP header compression, encryption, and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session management;
- Support of network slicing;
- QoS Flow management and mapping to data radio bearers;
- Support of UEs in RRC_INACTIVE state;
- Distribution function for NAS messages;
- Radio access network sharing;
- Dual connectivity; and
- Tight interworking between NR and E-UTRA.

The access and mobility management function (AMF) hosts the following main functions:
- Non-Access Stratum (NAS) signaling termination function;
- NAS signaling security;
- Access Stratum (AS) security control;
- Inter Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

Furthermore, the user plane function (UPF) hosts the following main functions:
- Anchor point for intra-/inter-RAT mobility (when applicable);
- External protocol data unit (PDU) session point of interconnect to a data network;
- Packet routing and forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane (e.g., packet filtering, gating, and UL/DL rate enforcement);
- Uplink traffic verification (SDF to QoS flow mapping); and
- Downlink packet buffering and downlink data indication triggering.

Finally, the session management function (SMF) hosts the following main functions:
- Session management;
- UE IP address allocation and management;
- Selection and control of UPF;
- Configuration function of traffic steering at a user plane function (UPF) to route traffic to proper destination;
- Control part policy enforcement and QoS; and
- Downlink data indication.

### <RRC Connection Setup and Reconfiguration Procedures>

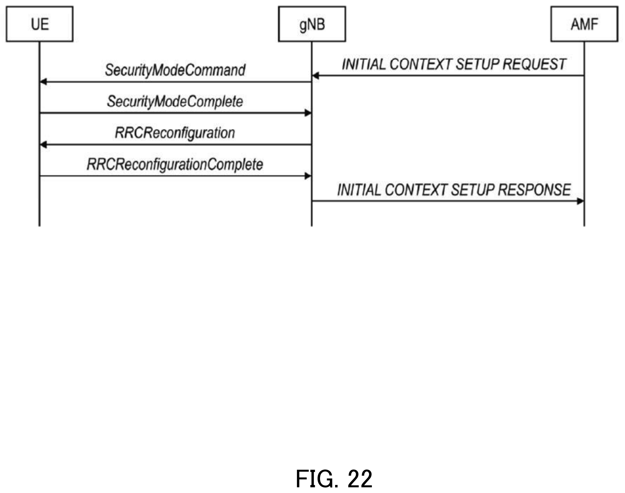

FIG. 22 illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. This transition involves that the AMF prepares the UE context data (including, for example, PDU session context, security key, UE radio capability, and UE security capabilities, etc.) and transmits the UE context data to the gNB with an INITIAL CONTEXT SETUP REQUEST. Then, the gNB activates the AS security with the UE, which is performed by the gNB transmitting a SecurityModeCommand message to the UE and by the UE responding to the gNB with a SecurityModeComplete message. Afterwards, the gNB performs the reconfiguration to set up the Signaling Radio Bearer 2 (SRB2) and Data Radio Bearer(s) (DRB(s)) by transmitting an RRCReconfiguration message to the UE and, in response, receiving an RRCReconfigurationComplete from the UE. For a signaling-only connection, the steps relating to the RRCReconfiguration are skipped since the SRB2 and DRBs are not setup. Finally, the gNB indicates to the AMF that the setup procedure is completed with an INITIAL CONTEXT SETUP RESPONSE.

In the present disclosure, thus, an entity (e.g., AMF, SMF, etc.) of the 5th Generation Core (5GC) is provided that includes control circuitry, which, in operation, establishes a Next Generation (NG) connection with a gNodeB, and a transmitter, which in operation, transmits an initial context setup message, via the NG connection, to the gNodeB to cause a signaling radio bearer setup between the gNodeB and User Equipment (UE). In particular, the gNodeB transmits a Radio Resource Control (RRC) signaling containing a resource allocation configuration information element (IE) to the UE via the signaling radio bearer. The UE then performs an uplink transmission or a downlink reception based on the resource allocation configuration.

<Usage Scenarios of IMT for 2020 and beyond>

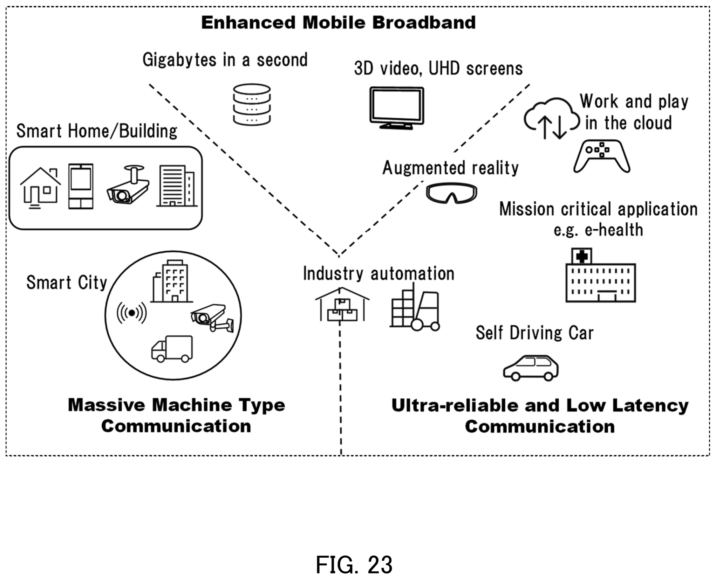

FIG. 23 illustrates some of the use cases for 5G NR. In the 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. Further to further extending the eMBB support, the current and future work would involve the standardization for ultra-reliable and low-latency communications (URLLC) and massive machine-type communications (mMTC). FIG. 23 illustrates some examples of envisioned usage scenarios for IMT for 2020 and beyond (see, e.g., ITU-R M. 2083 FIG. 2).

The URLLC use case has stringent requirements for capabilities such as throughput, latency, and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by specifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of the mMTC (massive machine type communication) is characterized by a very large number of connected devices typically transmitting a relatively low volume of non-delay sensitive data. Devices are required to be low cost and to have a very long battery life. From the NR perspective, utilizing very narrow bandwidth parts is one possible solution to have power saving from the UE perspective and enable the long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10⁻⁶ level), higher availability, packet size of up to 256 bytes, time synchronization down to the order of a few µs where the value can be one or a few µs depending on frequency range and short latency in the order of 0.5 to 1 ms (e.g., target user plane latency of 0.5 ms) depending on the use cases.

Moreover, for NR URLLC, several technology enhancements in terms of the physical layer perspective are possible. These technology enhancements include Physical Downlink Control Channel (PDCCH) enhancements related to compact DCI, PDCCH repetition, and increased PDCCH monitoring. Further, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements are possible. The term "mini-slot" refers to a transmission time interval (TTI) including a smaller number of symbols than a slot (a slot includes fourteen symbols).

### <QoS Control>

The 5G Quality of Service (QoS) model is based on QoS flows and supports both QoS flows that require guaranteed flow bit rate (GBR QoS flows) and QoS flows that do not require guaranteed flow bit rate (non-GBR QoS Flows). At the NAS level, the QoS flow is thus the finest granularity of QoS differentiation in a PDU session. The QoS flow is specified within a PDU session by a QoS Flow ID (QFI) carried in an encapsulation header via the NG-U interface.

For each UE, the 5GC establishes one or more PDU sessions. For each UE, the NG-RAN establishes at least one Data Radio Bearer (DRB) matching with the PDU session, for example as illustrated above with reference to FIG. 22. Additional DRB(s) for QoS flow(s) of that PDU session can be subsequently configured (it is up to NG-RAN when to do so). The NG-RAN maps packets belonging to different PDU sessions to different DRBs. NAS level packet filters in the UE and 5GC associate UL and DL packets with QoS flows, whereas AS-level mapping rules in the UE and in the NG-RAN associate UL and DL QoS flows with DRBs.

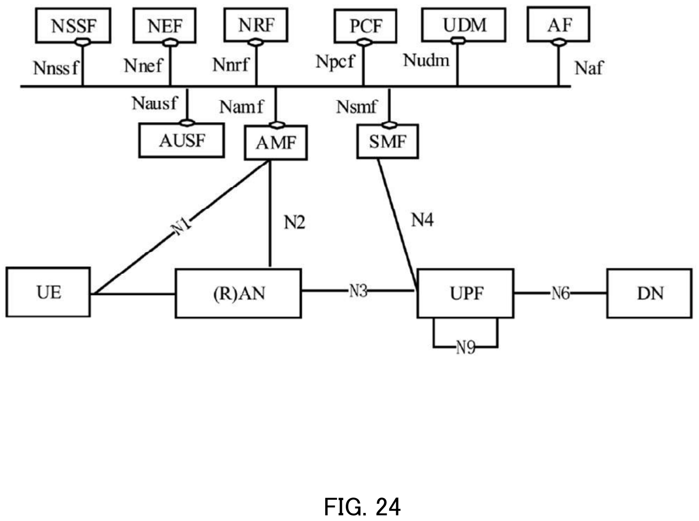

FIG. 24 illustrates a 5G NR non-roaming reference architecture (see TS 23.501 v16.1.0, section 4.23). Application Function (AF, e.g., an external application server hosting 5G services exemplified in FIG. 23) interacts with the 3GPP core network in order to provide services. For example, to support application giving influence on traffic routing, accessing Network Exposure Function (NEF) or interacting with the policy framework for policy control (see Policy Control Function, PCF), e.g., QoS control is performed. Based on operator deployment, application functions considered to be trusted by the operator can be allowed to interact directly with relevant network functions. Application functions not allowed by the operator to access directly the network functions use the external exposure framework via the NEF to interact with relevant network functions.

FIG. 24 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture) is provided that includes a transmitter, which in operation, transmits a request containing a QoS requirement for at least one of the URLLC, eMMB, and mMTC services to at least one of functions (e.g., NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the configurations of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a communication function (collectively referred to as a communication apparatus). The communication apparatus may include a radio transmitter/receiver (transceiver) and processing/control circuitry. The transceiver may include and/or function as a receiver and a transmitter. The transceiver (transmitter/receiver) may include a Radio Frequency (RF) module and one or more antennas. The RF module may include an amplifier and an RF modulator/demodulator or components similar to these components. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may include a device such as a controller or a sensor which is coupled to a communication device performing a function of communication described in the present disclosure. For example, the communication apparatus may include a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to one example of the present disclosure includes: control circuitry, which, in operation, configures, in a first frequency resource, a second frequency resource based on indication information, the first frequency resource being allocated to uplink transmission in a certain time resource, the second frequency resource not performing the uplink transmission; and transmission circuitry, which, in operation, performs the uplink transmission based on the second frequency resource.

In one example of the present disclosure, the indication information is information related to a resource in units of subcarriers.

In one example of the present disclosure, the indication information is information in a bitmap format that indicates whether each of a plurality of subcarriers included in the first frequency resource is the second frequency resource.

In one example of the present disclosure, the indication information is information indicating an allocation resource configuration for a reference signal.

In one example of the present disclosure, the control circuitry configures the second frequency resource by reducing or shifting the first frequency resource.

A base station according to one example of the present disclosure includes: control circuitry, which, in operation, configures, in a first frequency resource, a second frequency resource, the first frequency resource being allocated to uplink transmission in a certain time resource, the second frequency resource not performing the uplink transmission; and reception circuitry, which, in operation, performs uplink reception based on the second frequency resource.

A communication method according to one example of the present disclosure includes: configuring by a terminal, in a first frequency resource, a second frequency resource based on indication information, the first frequency resource being allocated to uplink transmission in a certain time resource, the second frequency resource not performing the uplink transmission; and performing the uplink transmission by the terminal based on the second frequency resource.

A communication method according to one example of the present disclosure includes: configuring by a base station, in a first frequency resource, a second frequency resource, the first frequency resource being allocated to uplink transmission in a certain time resource, the second frequency resource not performing the uplink transmission; and performing uplink reception by the base station based on the second frequency resource.

The disclosure of Japanese Patent Application No. 2023-067127, filed on April 17, 2023, including the specification, drawings and abstract, is incorporated herein by reference in its entirety.

### Industrial Applicability

An exemplary embodiment of the present disclosure is useful for radio communication systems.

### Reference Signs List

100 Base station
101, 201 Receiver
102, 202 Demodulator/decoder
103, 203 Muting resource configurator
104 Scheduler
105, 205 Control information holder
106, 206 Data/control information generator
107, 207 Encoder/modulator
108, 208 Transmitter
200 Terminal
204 Transmission controller

## Claims

1. A terminal, comprising:
control circuitry, which, in operation, configures, in a first frequency resource, a second frequency resource based on indication information, the first frequency resource being allocated to uplink transmission in a certain time resource, the second frequency resource not performing the uplink transmission; and
transmission circuitry, which, in operation, performs the uplink transmission based on the second frequency resource.

2. The terminal according to claim 1, wherein the indication information is information related to a resource in units of subcarriers.

3. The terminal according to claim 2, wherein the indication information is information in a bitmap format that indicates whether each of a plurality of subcarriers included in the first frequency resource is the second frequency resource.

4. The terminal according to claim 2, wherein the indication information is information indicating an allocation resource configuration for a reference signal.

5. The terminal according to claim 1, wherein the control circuitry configures the second frequency resource by reducing or shifting the first frequency resource.

6. A base station, comprising:
control circuitry, which, in operation, configures, in a first frequency resource, a second frequency resource, the first frequency resource being allocated to uplink transmission in a certain time resource, the second frequency resource not performing the uplink transmission; and
reception circuitry, which, in operation, performs uplink reception based on the second frequency resource.

7. A communication method, comprising:
configuring by a terminal, in a first frequency resource, a second frequency resource based on indication information, the first frequency resource being allocated to uplink transmission in a certain time resource, the second frequency resource not performing the uplink transmission; and
performing the uplink transmission by the terminal based on the second frequency resource.

8. A communication method, comprising:
configuring by a base station, in a first frequency resource, a second frequency resource, the first frequency resource being allocated to uplink transmission in a certain time resource, the second frequency resource not performing the uplink transmission; and
performing uplink reception by the base station based on the second frequency resource.
